(19) **Europäisches Patentamt**
**European Patent Office**
**Office européen des brevets**

(11) **EP 2 878 043 B1**

(12) **FASCICULE DE BREVET EUROPEEN**

(45) Date de publication et mention
de la délivrance du brevet:
**07.09.2016 Bulletin 2016/36**

(51) Int Cl.:
**H01S 3/067** *(2006.01)* **G02B 6/44** *(2006.01)*

(21) Numéro de dépôt: **13742407.3**

(22) Date de dépôt: **02.07.2013**

(86) Numéro de dépôt international:
**PCT/EP2013/063955**

(87) Numéro de publication internationale:
**WO 2014/016083 (30.01.2014 Gazette 2014/05)**

(54) **AMPLIFICATEUR À FIBRE OPTIQUE A SEUIL BRILLOUIN ÉLEVÉ ET MÉTHODE DE FABRICATION D'UN TEL AMPLIFICATEUR**

GLASFASERVERSTÄRKER MIT HOHER BRILLOUIN-SCHWELLE UND VERFAHREN ZUR HERSTELLUNG SOLCH EINES VERSTÄRKERS

OPTIC FIBER AMPLIFIER HAVING A HIGH BRILLOUIN THRESHOLD AND METHOD FOR MAKING SUCH AN AMPLIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2012 FR 1257173**

(43) Date de publication de la demande:
**03.06.2015 Bulletin 2015/23**

(73) Titulaire: **Office National d'Etudes et de Recherches
Aérospatiales (ONERA)
91120 Palaiseau (FR)**

(72) Inventeurs:
• **CANAT, Guillaume
91140 Villebon sur Yvette (FR)**
• **LOMBARD, Laurent
75013 Paris (FR)**
• **LE GOUËT, Julien
94110 Arceuil (FR)**
• **FLEURY, Didier
92140 Clamart (FR)**

(74) Mandataire: **Osha Liang
2, rue de la Paix
75002 Paris (FR)**

(56) Documents cités:
**US-A1- 2006 251 425      US-A1- 2007 019 918
US-A1- 2009 003 786      US-A1- 2009 110 355**

• **INDU SAXENA: ""optical fiber static sensors : reliability issues"", SPIE, PO BOX 10 BELLINGHAM WA 98227-0010 USA, 2007, XP040248042,**
• **ENGELBRECHT R ET AL: "SBS shaping and suppression by arbitrary strain distributions realized by a fiber coiling machine", IEEE/LEOS WINTER TOPICALS MEETING SERIES, 2009, IEEE, PISCATAWAY, NJ, USA, 12 janvier 2009 (2009-01-12), pages 248-249, XP031416723, ISBN: 978-1-4244-2610-2 cité dans la demande & ENGELBRECHT R ET AL: "SBS-suppression in variably strained fibers for fiber-amplifiers and fiber-lasers with a high spectral power density", SPIE, PO BOX 10 BELLINGHAM WA 98227-0010 USA, 2005, XP040203519,**

**Description**

ETAT DE L'ART

**Domaine technique de l'invention**

La présente invention concerne un amplificateur à fibre optique à seuil Brillouin élevé et une méthode de fabrication d'un tel amplificateur.

**Etat de l'art**

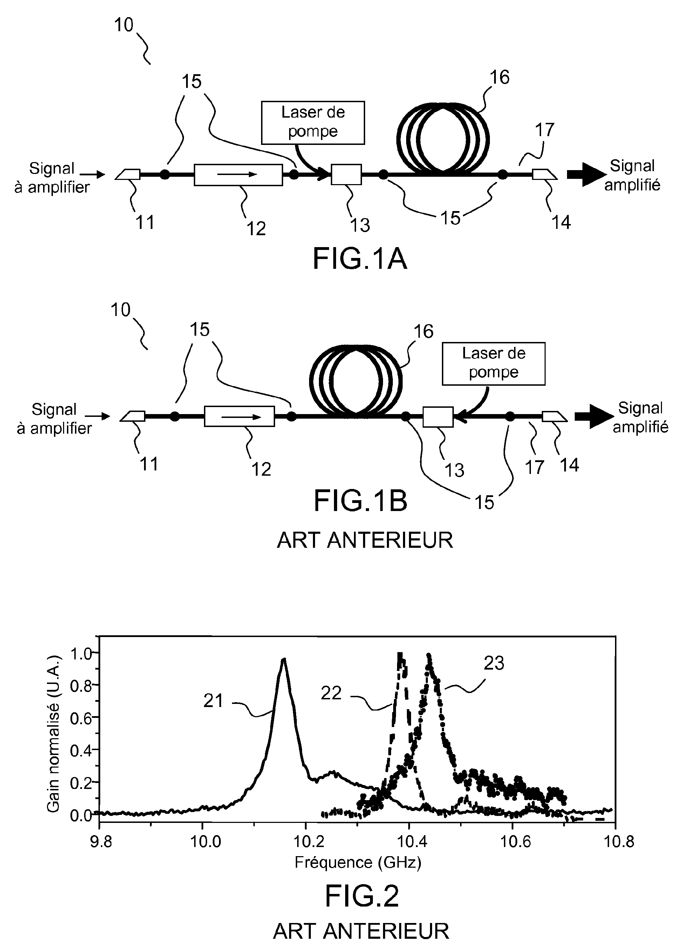

Un amplificateur à fibre optique comprend en général une fibre optique amplificatrice et un dispositif de couplage d'un faisceau laser signal incident, appelé dans la suite de la description faisceau signal, destiné à être amplifié dans ladite fibre. On connaît les amplificateurs à fibre dopée et les amplificateurs à fibre non linéaire. Dans un amplificateur à fibre dopée, une portion de la fibre optique est dopée avec une substance susceptible d'engendrer un gain optique, par exemple des ions dopants de type ions de terres rares et est pompée optiquement avec un faisceau laser de pompe afin de placer les ions dopants dans un état excité. Lorsqu'un faisceau signal passe à travers la portion de fibre dopée, il désexcite les ions par effet laser en produisant un photon identique au photon incident. Il y a ainsi amplification du faisceau signal. Dans un amplificateur à fibre optique non-linéaire, un ou plusieurs faisceau(x) laser de pompe créent un gain en générant une polarisation non-linéaire, utilisant par exemple les effets Raman ou Kerr. Dans ces deux types d'amplificateurs, si le faisceau de pompe et le faisceau signal se propagent dans le même sens on parle de pompage copropagatif. On parle de pompage contrapropagatif dans le cas opposé. On parle de pompage bidirectionnel si un faisceau de pompe est couplé dans les deux directions. Les figures 1A et 1B représentent deux exemples d'amplificateurs 10 comprenant une fibre optique amplificatrice 16 et fonctionnant respectivement en mode copropagatif et contrapropagatif. Le dispositif de couplage du faisceau signal que l'on cherche à amplifier comprend dans les exemples des figures 1A et 1B des éléments de couplage fibrés dont par exemple un connecteur 11 lui-même soudé à la fibre optique amplificatrice 16. Alternativement, le couplage du faisceau signal dans la fibre amplificatrice peut être obtenu par des éléments optiques non fibrés. L'amplificateur 10 peut comprendre d'autres éléments optiques passifs fibrés, par exemple un isolateur, un filtre, un ou plusieurs connecteurs, l'ensemble de ces éléments étant soudés. Dans l'exemple illustré sur les figures 1A et 1B, un isolateur 12 est agencé entre le connecteur 11 et la fibre amplificatrice 16 par exemple au moyen de soudures 15. L'isolateur permet de réduire fortement tout retour de flux lumineux vers les composants situés en amont de l'amplificateur. Notamment, l'amplificateur 10 peut comprendre un élément optique fibré muni d'un cordon de fibre optique passive 17 en sortie de fibre amplificatrice 16. L'élément fibré est par exemple un connecteur 14 permettant de diriger le faisceau amplifié vers d'autres composants optiques destinés à collimater ou focaliser le faisceau amplifié. Il peut aussi s'agir d'un isolateur ou d'un coupleur de pompe. On désignera par la suite indifféremment ce composant par cordon de sortie. Les connecteurs 11 et 14 sont par exemple des connecteurs de type FC/APC (selon l'expression anglo-saxonne « Fiber Connector / Angle Polished Connector). Un dispositif de couplage 13 fibré ou non permet de la même façon de coupler le faisceau de pompe dans la fibre, dans ces exemples des faisceaux de pompe issus de sources laser, par exemple des diodes laser. Dans le cas de pompage copropagatif, le même composant optique de couplage peut permettre de coupler le faisceau signal et le faisceau de pompe.

Dans le cas d'un faisceau signal fin spectralement (de largeur spectrale typiquement inférieure à 100 MHz), on observe au-delà d'une puissance lumineuse seuil ($P_{th}$) une saturation de la puissance lumineuse transmise due à un effet non linéaire dans la fibre appelé diffusion Brillouin stimulée (ou effet SBS selon l'abréviation de l'expression anglo-saxonne « Stimulated Brillouin Scattering »). Au-delà de cette puissance lumineuse seuil, appelée seuil Brillouin, la puissance lumineuse additionnelle est réfléchie sous forme d'une onde dite onde Stokes résultant de l'interaction de l'onde incidente avec des ondes acoustiques auto générées qui se propagent dans la fibre optique. Plus précisément dans la suite de la demande, le seuil Brillouin est défini comme la puissance optique du faisceau signal en sortie de l'amplificateur au-delà de laquelle un pourcentage donné de l'énergie lumineuse incidente est rétrodiffusée, ce pourcentage étant pris égal dans la suite à 10%. L'onde Stokes présente une fréquence optique $\nu_s$ décalée en fréquence (par effet Doppler) selon $\nu_s = \nu - \nu_B$ où $\nu$ est la fréquence de l'onde incidente et $\nu_B$, appelée fréquence Brillouin, est la fréquence de l'onde acoustique (environ 10 GHz pour un signal à 1,5 $\mu$m). Même en l'absence de signal contrapropagatif à la fréquence $\nu_s$, l'onde Stokes est générée par amplification des photons issus du bruit quantique se propageant en sens contraire du signal incident. La courbe de gain correspondante possède une forme en général Lorentzienne centrée autour de $\nu_B$ et de largeur $\Delta\nu_B\sim 40$ MHz. Il est aisé de mesurer le spectre de l'onde Stokes rétrodiffusée. Dans la limite où le gain subi par les photons Stokes est faible (inférieur à $10^5$ typiquement), le spectre de l'onde Stokes est proportionnel au spectre du gain Brillouin. Des exemples de courbes de gain issus de l'article de G. Canat et al. (« Characteristics of the Brillouin spectra in Erbium-Ytterbium fibers », Opt. Express 16, 3212 - 3222 (2008)) sont illustrés sur la figure 2. Les courbes 21, 22, 23 correspondent aux fibres E, B, C respectivement, dont des caractéristiques sont données dans la table 1 ci-dessous. Il s'agit de fibres optiques dopées Erbium Ytterbium provenant de différents fabricants. La fréquence Brillouin $\nu_B$ est une fonction de la vitesse locale des ondes acoustiques de la fibre. Il est établi dans la littérature que $\nu_B$ dépend de la composition de la fibre, de son état d'élongation $\varepsilon$, de sa température. Ainsi dans les exemples illustrés sur la figure 2, on observe des fréquences Brillouin prenant des valeurs comprises entre 10,12 GHz et 10,43 GHz (pour une mesure à 1552 nm), ces valeurs dépendant notamment du dopage en phosphore et en aluminium qui sont les codopants principaux de ces fibres et du profil de concentration des codopants le long de la fibre.

Table 1

| Fibre | Dopants | Diamètre de coeur ($\mu$m) | Ouverture numérique | Fréquence Brillouin du pic principal $\upsilon_B$ | Largeur spectrale à 3 dB |
|-------|---------|---------------------------|---------------------|--------------------------------------------------|--------------------------|
| B | Er,Yb | 6,3 | 0,16 | 10.31 GHz | 50 MHz |
| C | Er,Yb | 20 | 0,14 | 10.46 GHz | 48 MHz |
| E | Er,Yb | 18 | 0,18 | 10.19 GHz | 57 MHz |

De nombreuses publications ont proposé des techniques de réduction de l'effet SBS dans les amplificateurs à fibre optique. Notamment, en faisant varier $\nu_B$ le long de la fibre, on augmente le seuil d'apparition de l'effet SBS car l'amplification de l'onde Stokes n'est cumulative que dans la bande de gain $\Delta\nu_B$.

Il a ainsi été proposé (voir R. Engelbrecht et al. "SBS shaping and suppression by arbitrary strain distributions realized by a fiber coiling machine", IEEE/LEOS Winter Topicals Meeting Series, 2009, paper WC1.3., pp.248-249, 12-14 Jan. 2009) une machine permettant de bobiner une fibre optique avec un profil d'élongation variable le long de la fibre. L'article décrit comment une fibre optique passive peut être enroulée sur un cylindre en variant la tension appliquée lors de l'enroulement avec un dévidoir piloté par ordinateur, permettant un élargissement de la courbe de gain Brillouin accompagnée d'une augmentation significative du seuil Brillouin. Bien que cette technique soit décrite dans une fibre passive non amplificatrice de plusieurs centaines de mètres, les auteurs suggèrent d'appliquer cette technique aux amplificateurs à fibres. Cela nécessiterait cependant de bobiner la fibre et de l'étirer avant l'assemblage de l'amplificateur, ce qui d'une part, nécessite de laisser de part et d'autre des morceaux de fibre libres de contrainte et donc susceptibles de présenter un effet Brillouin important, et, d'autre part ne permet pas d'optimiser le profil d'élongation une fois l'amplificateur réalisé puisqu'une modification de l'étirement nécessiterait un démontage complet de celui-ci. Par ailleurs, la machine décrite pour le bobinage de la fibre est complexe et encombrante.

Le brevet US 7,486,852 propose une technique alternative dans laquelle on réalise une structure fibrée comprenant une fibre optique scellée à l'intérieur d'une structure possédant un axe neutre. La structure obtenue est placée dans un état libre de contraintes puis elle est déformée de façon à générer une variation de courbure qui induit un gradient longitudinal d'élongation pour augmenter le seuil Brillouin. La fibre est scellée dans la structure à une distance donnée variable de l'axe neutre de telle sorte que de très fortes contraintes compressives puissent être transmises le long de la fibre par déformation de la structure. Par comparaison avec la technique décrite dans R. Engelbrecht et al., cette technique permet de modifier l'allure spectrale du gain Brillouin dans des phases de mise au point de l'amplificateur à fibre en appliquant des déformations sur la structure fibrée. Cependant, le positionnement avec précision de la fibre par rapport à l'axe neutre n'est pas sans poser des difficultés de réalisation et celui-ci ne peut plus être modifié une fois la fibre scellée. Le scellement de la fibre contraint également fortement les conditions d'échanges thermiques entre la fibre qui s'échauffe sous l'effet des transitions non-radiatives et le milieu environnant. Il en résulte pour des fibres fortement pompées un échauffement de la fibre qui peut être problématique.

La demande de brevet US 2009/003786 A1 décrit (ab. fig.40 §185) une fibre optique à seuil Brillouin élevé comprenant en particulier une structure comprenant une partie déformable autour de laquelle au moins une partie de ladite fibre optique amplificatrice est enroulée sous forme de spires, lesdites spires étant en contact avec une surface de ladite partie déformable.

Un objet de l'invention consiste à proposer un amplificateur à fibre qui présente un seuil Brillouin élevé sans les limitations de l'art antérieur. Notamment, un objet de l'invention est de proposer un amplificateur à fibre optique simple de conception, dont l'allure spectrale du gain Brillouin puisse être ajustée facilement dans les phases de mise au point de l'amplificateur.

RESUME DE L'INVENTION

Selon un premier aspect, la présente demande concerne un amplificateur à fibre optique à seuil Brillouin élevé comprenant :

- une fibre optique amplificatrice comportant un coeur et une gaine, adaptée à l'amplification d'un faisceau signal se propageant dans ledit coeur;

- des moyens de couplage d'un faisceau signal dans une extrémité d'entrée de ladite fibre optique amplificatrice,

- des moyens de couplage d'un faisceau laser de pompe pour le pompage de ladite fibre optique amplificatrice,

- une structure comprenant une partie déformable autour de laquelle au moins une partie de ladite fibre optique amplificatrice est enroulée sous forme de spires, lesdites spires étant en contact avec une surface de ladite partie déformable, le frottement de ladite fibre optique sur ladite surface entraînant lors de la déformation de ladite partie déformable une élongation de ladite fibre optique amplificatrice selon un profil d'élongation variable d'une spire à l'autre.

Une telle structure permet notamment de procéder à des réglages de l'élongation de la fibre amplificatrice et donc du gain Brillouin dans les phases de test de l'amplificateur à fibre optique complet, c'est-à-dire équipé par exemple des éléments de couplage fibrés et autres éléments destinés à être soudés à la fibre optique amplificatrice, ces éléments pouvant influencer l'allure spectrale du gain Brillouin.

Selon une variante, la fibre optique amplificatrice est fixée à ladite structure en un nombre donné de points de fixation, l'élongation de la fibre optique amplificatrice auxdits points de fixation étant inférieure à 0,3%. Une telle structure permet d'atteindre des valeurs d'élongation importantes et de ce fait une plus grande élévation du seuil Brillouin sans risque de délaminage de la fibre optique amplificatrice.

Selon une variante, la distance entre le point de fixation le plus proche d'une extrémité de sortie de la fibre optique amplificatrice et ladite extrémité de sortie est inférieure à 25 cm, limitant la longueur de fibre optique amplificatrice non contrainte.

Selon une variante, le profil d'élongation comprend plusieurs extremums locaux, les valeurs absolues des variations d'élongation entre deux extremums formant une suite croissante entre l'entrée et la sortie de la fibre optique amplificatrice, la déposante ayant démontré que des variations d'élongation importantes en sortie de fibre où la puissance optique est maximale permet une élévation du seuil Brillouin.

Selon une variante, le profil d'élongation comprend un maximum local unique. La déposante a montré que dans la plupart des cas, un tel type de profil d'élongation s'avérait très efficace pour l'augmentation du seuil Brillouin.

Par exemple, lorsque les moyens de couplage du faisceau pompe sont adaptés à un pompage copropagatif dans la gaine, le profil d'élongation peut comprendre avantageusement un maximum local unique, atteint au voisinage d'une distance donnée de l'extrémité d'entrée de la fibre optique d'amplificatrice, la distance étant une fraction x de la longueur de la fibre optique amplificatrice telle que 0,4 < x < 0,6, la déposante a montré que ce profil permettait une optimisation de l'élévation du seuil Brillouin en fonction de l'élongation. Par exemple, le maximum local est sensiblement au milieu des extrémités d'entrée et de sortie.

Selon un autre exemple, lorsque les moyens de couplage du faisceau pompe sont adaptés à un pompage contrapropagatif dans la gaine ou copropagatif dans le coeur, le profil d'élongation peut comprendre avantageusement un maximum local unique, atteint au voisinage d'une distance donnée de l'extrémité d'entrée de la fibre optique d'amplificatrice, la distance étant une fraction x de la longueur de la fibre optique amplificatrice telle que 0,5 < x < 0,9.

Selon une variante, la partie déformable de la structure comprend au moins deux parties rigides autour desquelles ladite partie de la fibre optique est enroulée sous forme de spires, la déformation de la structure étant obtenue par écartement desdites parties rigides. Cette structure permet par simple réglage de l'écartement entre les parties rigides de modifier le profil d'élongation entre les spires.

Selon une variante, la partie déformable de la structure comprend une première partie rigide fixe et deux autres parties rigides mobiles dont une extrémité est fixée à ladite partie fixe et l'autre extrémité peut être écartée, permettant ainsi la déformation de la partie déformable. Le profil d'élongation de la fibre optique amplificatrice peut être ajusté par réglage de l'écartement entre les parties mobiles et la partie fixe.

Selon une variante, les parties rigides ont des formes de demi-cylindre, permettant de former des spires de forme généralement circulaire ou elliptique.

Selon une variante, l'amplificateur comprenant un cordon de fibre passive soudé à l'extrémité de sortie de ladite fibre optique amplificatrice, le spectre Brillouin de l'ensemble fibre amplificatrice et cordon de sortie, lorsqu'il est soumis à une tension nulle, comprend au moins deux pics dont un pic principal correspondant au gain Brillouin de la fibre amplificatrice et un pic correspondant au gain Brillouin du cordon de sortie, le pic correspondant au gain Brillouin du cordon de sortie présentant une fréquence inférieure audit pic principal correspondant au gain Brillouin de la fibre amplificatrice. Cette configuration permet une très bonne élévation du seuil Brillouin, malgré la présence d'un cordon de sortie.

Selon une variante, l'amplificateur comprenant un cordon de fibre passive soudé à l'extrémité de sortie de ladite fibre optique amplificatrice et dans lequel le spectre Brillouin de l'ensemble fibre amplificatrice et cordon de sortie, lorsqu'il est soumis à une tension nulle, comprend au moins deux pics dont un pic principal correspondant au gain Brillouin de la fibre amplificatrice et un pic correspondant au gain Brillouin du cordon de sortie, le pic correspondant au gain Brillouin du cordon de sortie présentant une fréquence supérieure d'au moins 400 MHz audit pic principal correspondant au gain Brillouin de la fibre amplificatrice.

Selon une variante, l'amplificateur comprend une fibre optique amplificatrice dont le spectre Brillouin lorsqu'elle est soumise à une tension nulle ne présente pas de pics secondaires acoustiques.

Selon une variante, la fibre optique amplificatrice et/ou la structure sont recouvertes d'un matériau élastique ou polymère, formant avantageusement une gaine autour de la fibre et/ou de la structure d'épaisseur supérieure à 500$\mu$m et un module inférieur à 100 MPa. Cette variante permet de conserver la qualité spatiale du faisceau en sortie de fibre dans le cas notamment de fibres à modes adaptés et/ou de préserver l'état de polarisation linéaire lorsque la fibre amplificatrice est une fibre à maintien de polarisation.

Selon un deuxième aspect, l'invention concerne un système oscillateur maître amplifié comprenant une source d'émission laser d'un faisceau signal, une source d'émission laser d'un faisceau de pompe et un amplificateur à fibre optique selon le premier aspect destiné à amplifier ledit faisceau signal, dans lequel ledit faisceau de pompe est couplé à la fibre optique amplificatrice de l'amplificateur.

Un tel système oscillateur maître amplifié (ou MOPA selon l'abréviation de l'expression anglo-saxonne « Master Oscillator Power Amplifier ») peut être utilisé par exemple dans un système LIDAR dont les performances sont d'autant meilleures que la puissance générée par le MOPA est grande.

Selon une variante, le profil d'élongation de la fibre optique amplificatrice dans le système oscillateur maître amplifié comprend un maximum local unique, atteint au voisinage d'une distance donnée de l'extrémité d'entrée de la fibre optique amplificatrice, ladite distance étant une fraction x de la longueur de la fibre optique amplificatrice déterminée par minimisation du gain logarithmique Brillouin maximal.

Selon un troisième aspect, l'invention concerne une méthode de fabrication d'un amplificateur à fibre amplificatrice comprenant :

- l'enroulement d'au moins une partie de ladite fibre optique amplificatrice autour d'une partie déformable d'une structure sous forme de spires, lesdites spires étant en contact avec une surface de ladite partie déformable de la structure,
- la fixation de la fibre optique amplificatrice à ladite structure en au moins deux points de fixation,
- la déformation de ladite partie déformable de la structure, entraînant par frottement de ladite fibre optique amplificatrice sur ladite surface une élongation de ladite fibre optique amplificatrice selon un profil d'élongation variable d'une spire à l'autre.

Selon une variante, ledit amplificateur comprenant des éléments optiques passifs fibrés, la méthode comprend en outre une ou plusieurs étape(s) préalable(s) de soudure à l'au moins une des deux extrémité(s) de la fibre optique amplificatrice desdits éléments optiques passifs fibrés.

Selon une variante, la méthode comprend en outre :

- le couplage d'un faisceau signal dans une extrémité d'entrée de ladite fibre optique amplificatrice,
- la mesure du spectre de fluorescence Stokes de l'onde rétrodiffusée résultant de la diffusion Brillouin dans ladite fibre optique amplificatrice, et
- la déformation de ladite structure déformable en fonction du spectre de fluorescence Stokes.

Selon une variante, le profil d'élongation présentant un maximum local, la déformation de ladite partie déformable de la structure comprend l'ajustement de la valeur maximale de l'élongation ou de la position du maximum.

BREVE DESCRIPTION DES DESSINS

D'autres avantages et caractéristiques de l'invention apparaîtront à la lecture de la description, illustrée par les figures suivantes :

Figures 1A et 1B, le schéma d'un amplificateur à fibre selon l'art antérieur adapté pour fonctionner respectivement en mode copropagatif et contrapropagatif (déjà décrites);

Figure 2, des courbes expérimentales illustrant l'allure spectrale du gain Brillouin dans trois fibres optiques commerciales (déjà décrites);

Figures 3A et 3B, deux exemples de structures déformables adaptées à un amplificateur à fibre optique selon l'invention;

Figure 4, un autre exemple d'une structure déformable adaptée à un amplificateur à fibre optique selon l'invention;

Figure 5, un exemple de profil de l'élongation de la fibre amplificatrice selon une variante ;

Figures 6A et 6B, des courbes obtenues par simulation numérique montrant dans une fibre optique amplificatrice présentant un gain Brillouin du type de celui illustré sur la figure 11A, l'élévation du seuil Brillouin en fonction de la position du maximum local de l'élongation, respectivement en configuration copropagative et contrapropagative, pour une puissance optique du signal se propageant dans la fibre illustrée respectivement sur les figures courbes 67 et 68 de la figure 6C et la figure 6C, des courbes de puissance optique du signal en fonction de la position dans la fibre ;

Figure 7, des courbes expérimentales montrant l'allure spectrale du gain Brillouin dans différentes configurations d'élongation d'une fibre optique amplificatrice présentant sans étirement un gain Brillouin du type de celui illustré sur la figure 11A ;

Figure 8, des courbes obtenues par simulation numérique montrant l'allure spectrale du gain Brillouin dans une fibre optique amplificatrice présentant un gain Brillouin du type de celui illustré sur la figure 11A, étirée sur toute sa longueur sauf une zone de 25 cm et 10 cm à sa sortie, respectivement;

Figure 9, des courbes expérimentales montrant l'allure spectrale du gain Brillouin dans un amplificateur à fibre réalisé avec une structure déformable du type de celle de la figure 3B et une fibre amplificatrice présentant un gain Brillouin du type de celui illustré sur la figure 11A;

Figure 10, des courbes obtenues par simulation numérique montrant élévation du seuil Brillouin en fonction de la valeur maximale de l'élongation, avec une fibre optique amplificatrice présentant un gain Brillouin du type de celui illustré sur la figure 11A, et étirée selon un profil du type de celui de la figure 5;

Figures 11A et 11B, l'allure spectrale du gain Brillouin de fibres optiques amplificatrices soudées à des fibres passives adaptées pour la réalisation d'un amplificateur à fibre, selon deux exemples de réalisation ;

Figure 12, un schéma d'un dispositif expérimental pour la mesure du gain Brillouin ;

Figures 13, un schéma d'un exemple de réalisation d'un système oscillateur maître amplifié comprenant un amplificateur à fibre selon l'invention;

Figure 14, des courbes expérimentales montrant la puissance de sortie du signal obtenue avec un système du type de celui de la figure 13.

## DESCRIPTION DETAILLEE

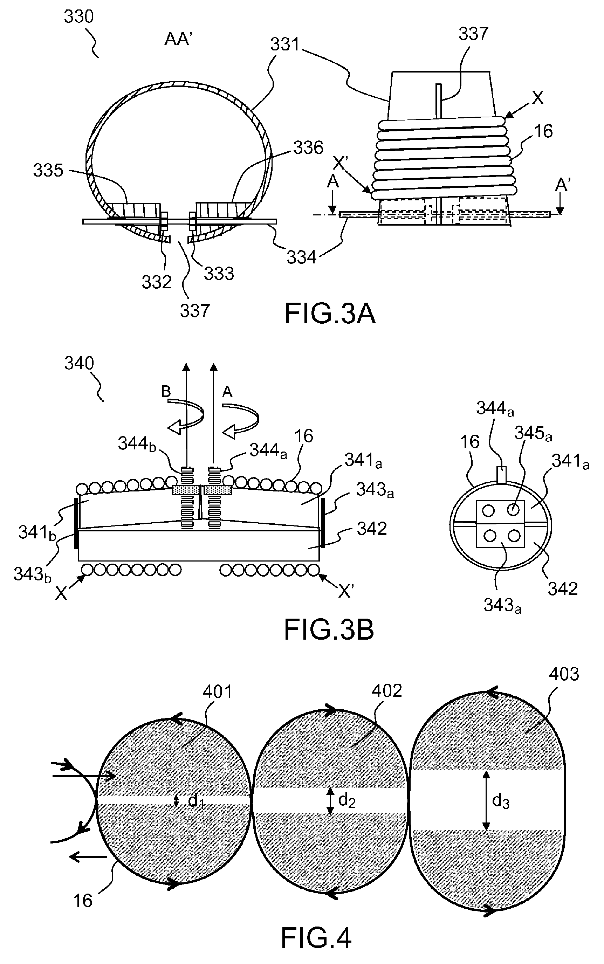

La figure 3A illustre selon une vue en coupe et une vue de côté un exemple de réalisation d'une structure comprenant notamment une partie déformable 330 adaptée à un exemple de réalisation d'amplificateur à fibre optique selon l'invention. L'amplificateur est par exemple du type de celui décrit au moyen des figures 1A et 1B, au moins une partie de la fibre amplificatrice 16 étant enroulée autour de la structure déformable. L'amplificateur comprend notamment des moyens de couplage d'un faisceau signal avec une extrémité d'entrée de la fibre optique amplificatrice et des moyens de couplage d'un faisceau de pompe pour un pompage copropagatif ou contrapropagatif. Les moyens de couplage peuvent comprendre des éléments de couplage fibrés, par exemple des connecteurs. L'amplificateur peut comprendre d'autres éléments optiques passifs fibrés tels que décrits au moyen des figures 1A, 1B, de type isolateur, fibre, etc.

La structure déformable 330 comprend un cylindre creux 331 partiellement fendu autour duquel est enroulée la fibre optique amplificatrice 16. La déformation de la structure est obtenue par l'écartement des deux bords de la fente 337, par exemple au moyen d'un axe fileté traversant 334 et de deux cales 335, 336 solidaires de 330 à travers lesquelles passe l'axe 334. Des écrous de réglage 332, 333 permettent d'écarter les cales l'une de l'autre et par conséquent de déformer le cylindre. Alternativement, la structure peut comprendre deux demi-cylindres creux fixés à l'une de leurs extrémités et un mécanisme permettant d'écarter les deux demi-cylindres à l'autre extrémité. Le cylindre ou les demi-cylindres sont en matériau suffisamment rigide pour que la déformation du cylindre puisse être transmise à la fibre.

Notamment, plus le diamètre des fibres est important, plus la structure doit être rigide, la rigidité dépendant du moment quadratique de la structure et du module d'Young du matériau. Ainsi dans l'exemple de la figure 3A, un cylindre en polychlorure de vinyle (PVC) d'épaisseur supérieure à 2 mm peut suffire pour des fibres optiques de diamètre inférieur à 125 $\mu$m D'autres matériaux peuvent être utilisés. Par exemple une structure en aluminium d'épaisseur supérieure à 500 $\mu$m La structure lorsqu'elle est déformée communique ainsi une élongation à chaque spire qui peut varier de 0 là où les bords de la fente sont maintenus (point noté X sur la figure 3A) jusqu'à une valeur $\delta X_{max}$ au point où les bords sont les plus écartés (point noté X' sur la figure 3A). Le frottement entre la fibre et la surface externe du cylindre permet de réduire le couplage entre plusieurs spires successives. Le coefficient de frottement entre la fibre et la surface externe du cylindre augmente au fur et à mesure que le cylindre est déformé par écrasement de la gaine externe en polymère de la fibre. Pour une qualité de surface standard, la déposante a montré qu'un coefficient de frottement entre la gaine externe et le cylindre à faible tension entre typiquement 0,05-0,25 était suffisant pour l'effet recherché. Il est ainsi possible d'obtenir par déformation de la structure un profil d'élongation $\varepsilon$ variable d'une spire à l'autre. On définit l'élongation $\varepsilon(z)$ pour une portion de fibre située en z de longueur au repos l et de longueur l+dl après élongation par $\varepsilon(z)=dl/l$. L'élongation $\varepsilon$ variable d'une spire à l'autre se traduit en un décalage du spectre de gain Brillouin d'une spire à l'autre d'une quantité $\Delta\nu$. Le coefficient $K=\Delta\nu/\varepsilon$ dépend de la fibre considérée. Pour un signal optique incident de longueur d'onde 1545 nm, K se situe en général entre 400 et 550 MHz/% d'élongation. La variation du décalage d'une spire à permet d'augmenter le seuil Brillouin en réduisant la longueur effective pour laquelle le gain Brillouin à une fréquence donnée se cumule.

La fabrication d'un amplificateur à fibre optique au moyen d'une structure déformable décrite par exemple au moyen de la figure 3A comprend avantageusement l'enroulement de la fibre optique amplificatrice 16 ou d'au moins une partie de ladite fibre autour de la structure déformable pour former des spires en contact avec une surface de la structure déformable, c'est-à-dire dans l'exemple de la figure 3A, la surface externe du cylindre partiellement fendu 331 ou des demi-cylindres. La fibre optique amplificatrice 16 peut ensuite être fixée à la structure aux points de fixation X et X' de la structure. La déformation de la structure entraîne alors par frottement de la fibre optique amplificatrice sur la surface externe de la structure une élongation de la fibre selon un profil d'élongation variable d'une spire à l'autre. Avantageusement, lorsque d'autres éléments fibrés sont prévus dans l'amplificateur, comme des éléments optiques de couplage ou d'autres éléments fibrés passifs tels que l'isolateur 12, le connecteur 14 et le cordon de sortie 17 (figures 1A, 1B), il peut être prévu de procéder d'abord à la soudure des différents éléments à la fibre optique amplificatrice puis à son enroulement autour de la structure déformable. Comme cela sera décrit plus en détails dans la suite de la description, il est ainsi possible de procéder à des réglages de l'élongation de la fibre amplificatrice et donc du gain Brillouin dans les phases de test de l'amplificateur à fibre optique complet, c'est-à-dire équipé des dispositifs de couplage et autres éléments destinés à être soudés à la fibre optique amplificatrice, ces éléments pouvant influencer l'allure spectrale du gain Brillouin. D'autre part, il n'est pas nécessaire de laisser des longueurs de fibre non contraintes en vue de la soudure ultérieure avec les différents éléments, ce qui réduit, notamment en sortie de la fibre optique amplificatrice, le risque d'augmentation du gain Brillouin.

Dans l'exemple de la figure 3A, il y a cependant une limite à l'élongation maximale $\delta X_{max}$ due aux phénomènes de délaminage. En effet, lorsque la fibre, généralement composée d'une gaine en matériau polymère et d'une partie en verre (par exemple en silice), est attachée à la structure en un point, le contact se fait par le polymère qui peut être collé ou plaqué fortement contre la structure. Lors de mise sous contrainte de la fibre, il peut résulter de la forte variation entre les champs de déplacement de la partie en verre de la fibre (qui se déplace) et de déplacement de la gaine polymère (qui est maintenue immobile) un champ de cisaillement au niveau du point d'attache. Lorsque le cisaillement à l'interface silice / polymère devient comparable à la force de cohésion de l'interface entre le coeur et la gaine, le polymère peut se détacher. On parle de délaminage. La même situation peut se produire à l'interface polymère / colle. De surcroît, dans le cas d'une fibre dite à double gaine pour laquelle le faisceau de pompe se propage dans le guide formé par la gaine interne en verre et la gaine polymère d'indice plus faible, le faisceau de pompe peut subir des diffusions dues aux irrégularités de l'interface délaminée. Le faisceau de pompe peut alors pénétrer dans le polymère qui l'absorbe et s'échauffe jusqu'à sa destruction.

Pour réduire le risque de délaminage et permettre des élongations maximales plus importantes de la fibre, il est avantageux de fixer la fibre à la structure en des points de fixations pour lesquels l'élongation de la fibre est faible, de façon à réduire le champ de cisaillement au niveau du point d'attache. La fibre peut être fixée à une partie fixe de la structure ou à la partie déformable de la structure, en des points où l'élongation est faible. En prenant une valeur maximale acceptable de 200 MPa pour le cisaillement que peut supporter la couche d'adhésion entre le polymère de gaine et la partie en silice de la fibre et un module de Young de la fibre pris égal à celui de la silice soit de l'ordre de 70 GPa, on trouve une élongation maximale de l'ordre de 0,3% à appliquer à la fibre au niveau du point d'attache afin de réduire le risque de délaminage.

Une telle configuration est possible dans l'exemple de la figure 3A en prévoyant au niveau du point X' où l'élongation de la fibre est maximale un dispositif de renvoi (non représenté) afin que la fibre repasse en sens inverse le long de son trajet initial vers le point X. Ainsi, la fibre amplificatrice se trouvera fixée à la structure déformable en des points de fixation proches du point X d'élongation minimale.

La figure 3B présente une variante pour une structure déformable adaptée à la réalisation d'un amplificateur à fibre optique à seuil Brillouin élevé permettant de réduire le risque de délaminage. Dans l'exemple de la figure 3B, la structure comprend une partie déformable 340 comprenant trois parties rigides 341a, 341b, 342, par exemple en forme de demi-cylindres, dont une partie rigide fixe (1a partie référencée 342) et deux parties 341a et 341b plus courtes, mobiles, fixées par l'une de leurs extrémités aux extrémités de la partie fixe 342, par exemple au moyen de charnières 343a, 343b. Les deux autres extrémités des parties 341a et 341b peuvent s'écarter de la partie fixe 342 au moyen d'un mécanisme d'écartement. Par exemple, dans l'exemple de la figure 3B, le mécanisme d'écartement comprend pour chaque pièce 341a, 341b, un système de tige filetée tournant dans un écrou solidaire de la partie que l'on cherche à écarter, et noté respectivement 344a et 344b sur la figure 3B. La rotation indiquée par les flèches A et B des mécanismes d'écartement 344a et 344b permet la translation des écrous le long de la tige filetée et l'écartement des parties rigides 341a, 341b, résultant dans une déformation maximale de la partie déformable de la structure 340 en son centre. Ainsi, la distance entre 341a et 342 d'une part et entre 341b et 342 d'autre part varie le long de la partie 342 pour atteindre un maximum au niveau des mécanismes d'écartement 344a, 344b tout en garantissant une élongation nulle ou quasi nulle aux extrémités où la fibre est attachée.

La méthode de fabrication d'un amplificateur à seuil Brillouin élevé au moyen de la structure déformable 340 telle que décrite sur la figure 3B est sensiblement la même que celle décrite précédemment. Les différents éléments de couplage ou autres éléments optiques passifs fibrés éventuels sont tout d'abord soudés à la fibre optique amplificatrice. Les mécanismes d'écartement sont réglés au niveau d'écartement minimum. La fibre optique amplificatrice 16 est enroulée autour de la structure déformable pour former des spires en contact avec les surfaces extérieures des parties 341 a, 341b, 342, formant par exemple chacun des demi-cylindres, les spires étant alors de forme circulaire ou elliptique. La fibre optique amplificatrice est fixée à la structure aux points de fixation X et X', par exemple par un adhésif, les points de fixation étant situés aux extrémités des parties 341a, 341b proches des charnières 343a, 343b où la déformation reste minimale. Alternativement, les points de fixation X et X' peuvent se trouver sur un bâti fixe (non représenté sur la figure 3B) de la structure. Des rotations A et B peuvent alors être effectuées pour écarter les deux autres extrémités des parties 341a, 342b de la partie fixe 342, entraînant une élongation de la fibre optique amplificatrice avec un profil d'élongation présentant un maximum local dans la région centrale et une élongation minimale aux extrémités. Une fois le réglage terminé, la fibre peut être immobilisée, par exemple par collage, par une résine, ou par un dispositif approprié maintenant la fibre en position par compression.

Comme précédemment, la rigidité des parties 341a, 341b, 342 formant la structure doit être suffisante pour assurer que la déformation de celle-ci sous l'effet de la force de rappel exercée par la fibre optique amplificatrice lorsqu'on écarte les parties de la structure soit négligeable devant la valeur de l'écartement recherchée. Dans le cas contraire en effet, il risque d'y avoir une saturation de l'élongation relative de la fibre optique lors de la déformation de la structure, la force de rappel étant de direction contraire à celle de la force d'écartement. On peut montrer que plus le diamètre de la fibre est important, plus la structure doit être rigide, la rigidité de chaque partie dépendant de son moment quadratique et du module d'Young du matériau qui la compose.

Par ailleurs, on pourra choisir un coefficient de frottement entre la gaine externe de la fibre optique amplificatrice et la surface de la partie déformable de la structure autour de laquelle la fibre est enroulée suffisant pour que, même à faible tension, la déformation entre deux spires soit peu couplée, ce qui permet d'obtenir un profil d'élongation non uniforme, mais pas trop fort pour obtenir un effet de moyenne de l'élongation sur l'échelle d'une demi-spire. Typiquement, la déposante a montré que pour une qualité de surface standard, un coefficient de frottement strictement supérieur à 0, avantageusement supérieur à 0,05 était approprié ; avantageusement, il sera choisi inférieur à 0,25.

Comme précédemment expliqué, un avantage de la structure déformable 340 représentée sur la figure 3B est notamment qu'elle présente une bonne résistance au délaminage, les points de fixation se trouvant en des points de la fibre optique amplificatrice pour lesquels l'élongation reste minimale.

Bien entendu, l'invention n'est pas limitée aux exemples particuliers représentés sur les figures 3A et 3B. D'autres structures sont possibles, qui présentent une partie déformable autour de laquelle la fibre optique amplificatrice peut être enroulée sous forme de spires, les spires étant en contact avec une surface de la partie déformable. Par exemple, la figure 4 illustre selon une vue de coupe un exemple de structure comprenant une partie déformable formée de plusieurs éléments 401, 402, 403 définissant une surface autour de laquelle la fibre optique amplificatrice s'enroule. Sur la vue de la figure 4, le sens d'enroulement de la fibre est représenté par des flèches. Chaque élément comprend par exemple un assemblage vis/écrou permettant l'écartement des deux demi-cylindres qui la composent, les distances $d_1$, $d_2$, $d_3$ indiquant l'écartement entre les parties de chacun des éléments. Une telle structure présente notamment l'avantage à volume d'encombrement identique, de limiter la hauteur de la structure complète.

De manière générale, la déposante a montré qu'un profil d'élongation de la fibre optique amplificatrice avec des valeurs d'élongation nulles ou quasi nulles aux extrémités de la fibre, ou plus généralement inférieures à la limite au-delà de laquelle il y a un risque de délaminage, et un maximum local d'élongation était particulièrement intéressant car il représente un bon compromis entre la longueur habituelle de la fibre optique amplificatrice (typiquement entre 2 m et 10 m), le diamètre maximal recherché pour la structure déformable (environ 20 cm), et la robustesse au délaminage.

Dans le cas d'une fibre très longue (longueur supérieure à 5 m typiquement), un profil d'élongation avec un seul maximum local conduirait à un plus faible gradient d'élongation car l'élongation maximale dans la fibre optique amplificatrice est limitée par différentes facteurs (par exemple la durée de vie de la fibre). Un profil en dents de scie avec plusieurs extrémums locaux peut s'avérer dans ce cas avantageux. Un tel profil présente par ailleurs l'avantage d'être aisément mis en oeuvre avec une structure déformable du type de celle décrite au moyen des exemples précédents (figures 3A, 3B et 4).

Plus précisément, la déposante a montré qu'on pouvait optimiser le profil d'élongation en fonction de différents paramètres, dont par exemple le type de pompage. Pour étudier les profils optimaux de l'élongation de la fibre dans des configurations copropagative ou contrapropagative dans un amplificateur à fibre selon l'invention, le comportement de divers amplificateurs est modélisé.

Comme cela apparaît sur la figure 2 déjà décrite, l'allure spectrale du gain Brillouin peut varier pour des fibres de même nature, dans cet exemple des fibres dopées Erbium Ytterbium, mais provenant de différents fabricants. En outre, le décalage $\Delta \upsilon$ subi par les pics de gain Brillouin lorsqu'un tronçon de fibre optique est soumis à une élongation $\varepsilon$ donnée est proportionnel à cette élongation avec un coefficient de proportionnalité K qui dépend de la fibre, de sa composition et de la longueur d'onde.

La table 2 ci-dessous illustre ainsi des valeurs du coefficient K=$\Delta \upsilon / \varepsilon$ mesurées à 1543 nm pour différentes fibres du commerce, les fibres B, C, D, E, F étant des fibres optiques amplificatrices et la fibre A une fibre optique passive F-PM1550 de Newport®.

Table 2

| Fibre | Dopants | Diamètre de coeur ($\mu$m) | Ouverture numérique | Fréquence Brillouin du pic principal $\upsilon_B$ (GHz) | Coefficient K=$\Delta \upsilon / \varepsilon$ (MHz / % élongation) | Largeur spectrale à 3 dB (MHz) |
|---|---|---|---|---|---|---|
| A | Non dopée | | | 10.89 | 540 | 27 |
| B | Er,Yb | 6,3 | 0,16 | 10.31 | 412 | 50 |
| C | Er,Yb | 20 | 0,14 | 10.46 | 467 | 48 |
| D | Er | 20 | 0,14 | 11.39 | 517 | |
| E | Er,Yb | 18 | 0,18 | 10.19 | | 57 |
| F | Er,Yb | 12 | 0,17 | 10.22 | 420 | 47 |

Parmi les fibres optiques amplificatrices recensées dans la table 2, les allures spectrales du gain Brillouin des fibres B, C et E ont déjà été décrites au moyen de la figure 2.

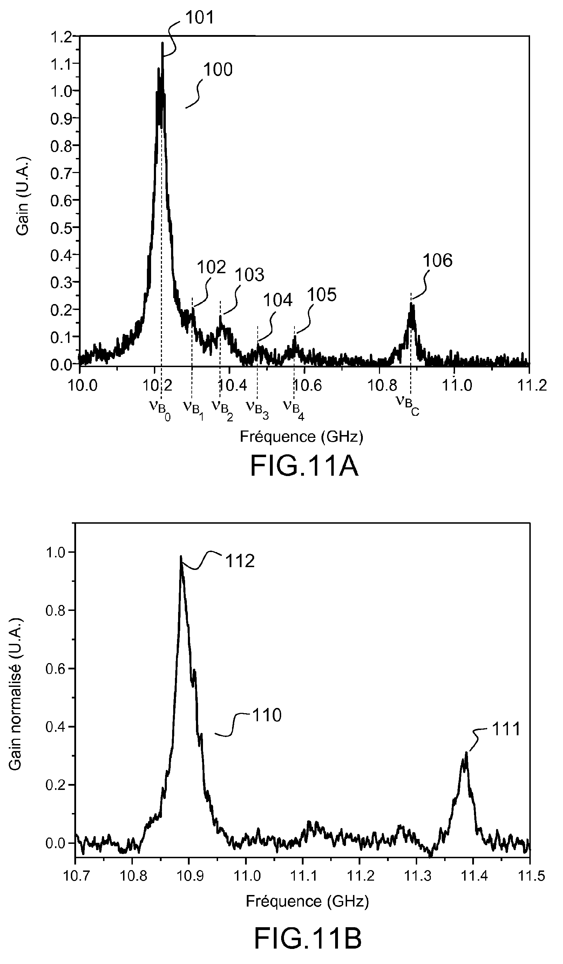

La courbe expérimentale 100 de la figure 11A représente l'allure spectrale du gain Brillouin de la fibre référencée F dans la table 2, dopée Erbium Ytterbium, présentant un diamètre de coeur de 11 $\mu$m et une ouverture numérique de 0,18, à l'entrée de laquelle est soudée un cordon en fibre passive A de longueur 2 m. A la sortie de la fibre F est également soudé un cordon de fibre A de longueur 20 cm. La courbe expérimentale 110 de la figure 11B représente l'allure spectrale du gain Brillouin de la fibre référencée D dans la table 2 à l'extrémité de sortie de laquelle est soudée un cordon de sortie en fibre passive de type A de longueur 20 cm.

Pour la modélisation, on considère une fibre optique amplificatrice de longueur L dans laquelle l'essentiel de la puissance optique circule dans le mode fondamental d'aire effective $A_{eff}$ et présentant une distribution de puissance P(z) variable en fonction de la position z sur la fibre, où 0 $\leq z \leq$ L.

La puissance P(z) est générée par un gain total $G_A$ résultant d'une amplification autre que Brillouin. Il peut par exemple s'agir d'un amplificateur Raman ou d'un amplificateur à fibre dopée. Pour un amplificateur donné, le profil P(z) qui décrit la puissance de signal à la position z le long de la fibre est calculé en utilisant un simulateur d'amplificateur à fibre. Un tel exemple de simulateur est décrit par exemple dans la publication Y. Wang and Hong Po, "Dynamic characteristics of double-clad fiber amplifiers for high-power pulse amplification," J. Lightwave Technol. 21,2262-2270 (2003) pour le cas des amplificateurs à fibres dopées Ytterbium et dans la publication G. Canat, J. -C. Mollier, J. -P. Bouzinac, G. M. Williams, B. Cole, L. Goldberg, Y. Jaouën, and G. Kulcsar, "Dynamics of high-power erbium-ytterbium fiber amplifiers," J. Opt. Soc. Am. B 22, 2308-2318 (2005) pour les amplificateurs à fibres dopées Erbium-Ytterbium.

On appelle $g_B$(f) le gain Brillouin à la fréquence f de la fibre libre de contrainte (c'est-à-dire sans tension), $f_{max}$ la fréquence à laquelle $g_B$(f) atteint son maximum et $g_B$(f,z) le gain Brillouin à la fréquence f d'un petit tronçon situé à la position z et susceptible d'être soumis à une élongation $\varepsilon$ responsable d'un décalage du spectre. On montre que :

$$g_B(f,z) = g_B(f - K\varepsilon(z)). \tag{1}$$

Les photons de bruit présents dans l'onde Stokes à la fréquence f sont par ailleurs amplifiés d'un facteur G(f)= $G_A \cdot \exp\gamma_{B,eff}(f)$ avec :

$$\gamma_{B,eff}(f) = \frac{\int_0^L g_B(f,z)P(z)dz}{A_{eff}} \tag{2}$$

Où $\gamma_{B,eff}$ est le gain logarithmique causé par amplification Brillouin à la fréquence f.

Le seuil Brillouin est défini par la puissance obtenue en sortie de fibre lorsqu'environ 10% de la puissance incidente est rétrodiffusée. Il est atteint lorsque le gain logarithmique Brillouin maximal $\gamma^{max}_{B,eff}$ vérifie la condition suivante :

$$\gamma^{\max}_{B,eff} = \max_f \gamma_{B,eff}(f) = K_B - \ln G_A \tag{3}$$

où $K_B$ est proche de 18.

On montre que si la fibre est libre de contraintes, une expression du gain logarithmique Brillouin $\gamma_{B,eff}$ est donnée par :

$$\gamma_{B,eff}(f) = \frac{g_B(f_{\max})P(L)}{A_{eff}} L_{eff} \tag{4}$$

où $L_{eff} = \dfrac{1}{P(L)}\displaystyle\int_0^L P(z)dz$ est la longueur dite effective de l'amplificateur, et P(L) est la puissance en sortie de fibre.

Dans le cas où la fibre est soumise à une contrainte $\varepsilon(z)$ monotone, on montre qu'il résulte sous certaines conditions de l'équation (3) une expression du gain logarithmique Brillouin selon l'équation ci-dessous:

$$\gamma_{B,eff}(f) = \frac{g_B(f_{\max})P(z(f))}{A_{eff}} \frac{\pi B}{2} \left| \frac{dz}{d\Delta v} \right|(f) \tag{5}$$

Où z(f) est la fonction réciproque de la distribution de décalage en fréquences $\Delta\upsilon(z)$ et B est la largeur spectrale du gain Brillouin de la fibre libre de contrainte. Si $\varepsilon(z)$ n'est pas monotone, il suffit de sommer l'expression (5) avec pour z(f) les différentes fonctions réciproques possibles.

En comparant (4) et (5), on voit que si $\Delta v(z)$ varie d'une valeur plus grande que B sur une échelle courte devant la longueur effective de fibre $L_{eff}$, la valeur maximale de $\gamma_{B,eff}$ va être réduite par rapport à une fibre libre de contrainte. Pour obtenir une augmentation du seuil Brillouin au moyen de l'élongation, il est donc avantageux d'avoir une variation rapide de l'élongation, notamment dans la zone de la fibre où la puissance est maximale. Plus précisément, afin de minimiser $\gamma^{\max}_{B,eff}$, la déposante a montré qu'il était intéressant de chercher un profil d'élongation telle que $\dfrac{d\Delta v}{dz}$ soit proportionnelle à P(z) au signe près, c'est-à-dire un profil d'élongation tel que la dérivée en z de l'élongation $\varepsilon(z)$, prise en valeur absolue, soit proportionnelle à P(z).

Dans la pratique il est difficile d'implémenter strictement un tel profil. On peut toutefois s'en approcher en choisissant $\varepsilon(z)$ linéaire par morceaux. Par exemple un profil d'élongation $\varepsilon_x(z)$ qui varie de façon triangulaire :

$$\varepsilon_x(z) = \begin{cases} \dfrac{z}{xL}\varepsilon_{\max} & \text{si } z \leq xL \\ (L-z)/(L-xL)\cdot\varepsilon_{\max} & \text{si } z > xL \end{cases} \tag{6}$$

Il est alors possible pour une puissance P(z) et une élongation maximale données, de déterminer la position du maximum d'élongation sur la fibre, cette position étant donnée par xL, où $0\leq x\leq 1$. La détermination de xL peut être faite par optimisation numérique de façon à rendre $\gamma_{B,eff}^{\max}$ le plus petit possible. Le gain logarithmique Brillouin $\gamma_{B,eff}$ (f) à minimiser est calculé au moyen des équations (1) et (2).

L'optimisation consiste alors à faire choisir le paramètre x du profil $\varepsilon_x(z)$ (équation (6)) pour une élongation maximale constante $\varepsilon_{max}$ et une distribution de puissance optique P(z) données qui minimise l'expression (7) suivante déduite des équations (1) et (2) :

$$\gamma_{B,eff}^{\max}(x) = \max_f \cdot \frac{\int_0^L g_B\big(f - K\varepsilon_x(z)\big)P(z)dz}{A_{eff}} \tag{7}$$

Il est rappelé que dans cette équation L est la longueur de la fibre optique, $g_B$ est le gain Brillouin effectif d'une portion de fibre libre de contrainte, K est le coefficient de proportionnalité entre le décalage en fréquence et l'étirement, P(z) est la puissance de signal optique à la position z et $A_{eff}$ est l'aire effective du mode optique. Les équations ci-dessus permettent de mettre en évidence des profils d'élongation avantageux spécifiques dans le cas d'amplificateurs en configuration copropagative ou contrapropagative. Pour un amplificateur donné, le profil P(z) qui décrit la puissance de signal à la position z le long de la fibre est calculé en utilisant un simulateur d'amplificateur à fibre.

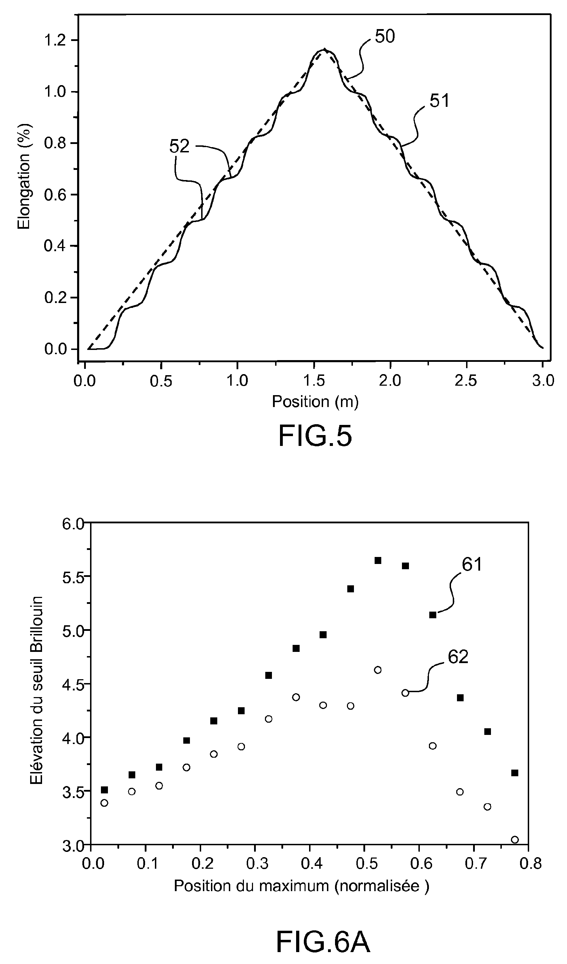

Plus précisément, la déposante a montré qu'en pompage copropagatif pompé dans la gaine, il peut être avantageux de rechercher un profil d'élongation de forme triangulaire, présentant un maximum local sensiblement au milieu de la fibre. Un exemple d'un tel profil d'élongation $\varepsilon(z)$ est représenté sur la figure 5 (courbe 50) pour une fibre de 3 m. La courbe 51 représente un profil d'élongation de ce type, obtenu lorsque le frottement de la fibre optique amplificatrice sur la surface de la partie déformable de la structure est plus important, entraînant des paliers 52 correspondant à une élongation quasi constante sur chacune des demi-spires. Un tel profil d'élongation peut être obtenu avec une structure déformable du type de la figure 3B en disposant deux parties 341a et 341b sensiblement de même longueur et en enroulant la fibre optique amplificatrice autour de la structure de façon régulière, de telle sorte que le nombre de spires de part et d'autre du maximum local soit sensiblement identique.

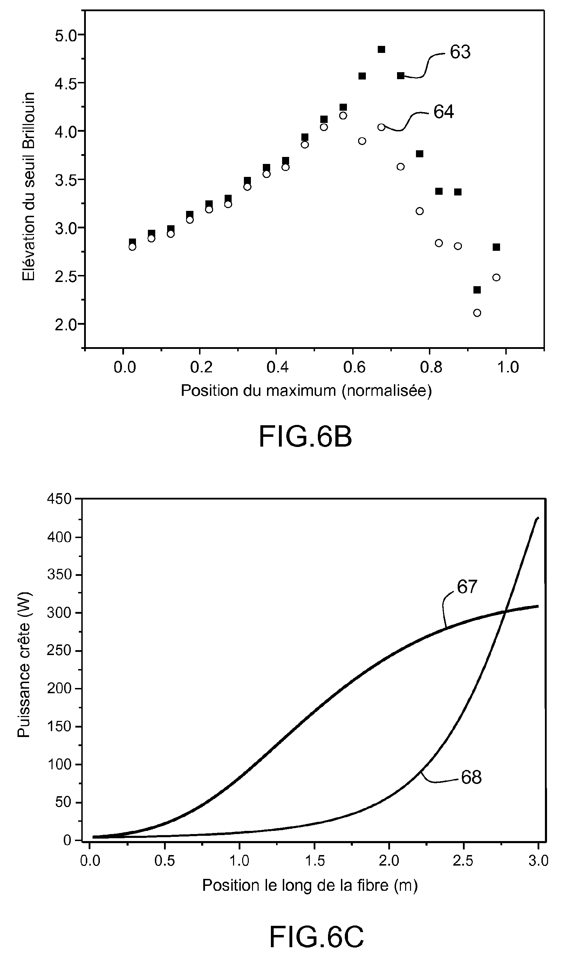

Ainsi, la figure 6A représente une simulation de l'élévation du seuil Brillouin en fonction de la position normalisée du maximum d'élongation, en mode copropagatif, avec un profil de puissance optique P(z) correspondant à un pompage copropagatif dans la gaine et représenté sur la courbe 67 de la figure 6C. En paramétrant la position du maximum du profil par une fraction x de la longueur de la fibre telle que $0<x<1$, on montre que l'optimum de la position du maximum vérifie $0,4<x<0,6$. L'optimisation consiste alors à faire varier le paramètre x qui paramètre le profil (6) introduit dans les équations (1) et (2) pour une élongation maximale constante et un profil P(z) donné et à minimiser la valeur du paramètre Brillouin maximal $\gamma_{B,eff}^{\max}(x)$. La courbe 62 est calculée avec une fibre optique amplificatrice dont une allure du gain Brillouin est représentée sur la courbe référencée 100 sur la figure 11A. La courbe 61 est obtenue avec une fibre identique mais sans les pics secondaires (seul le pic 101 est pris en compte dans la simulation). Dans les deux cas, on observe un optimum de positionnement du maximum d'élongation entre 0,4 et 0,6.

La figure 6B représente une simulation de l'élévation du seuil Brillouin obtenue dans les mêmes conditions que celles de la figure 6A mais pour un profil P(z) donné correspondant à un pompage contrapropagatif et illustré sur la courbe 68 de la figure 6C. Les courbes 63 et 64 calculées respectivement sans tenir compte des pics secondaires (courbe 63) et en prenant en compte les pics secondaires (courbe 64) montrent que l'optimum de positionnement du maximum correspond à $0,5<x<0,9$ en présence ou en absence de pics secondaires. En effet, dans le cadre d'un amplificateur à fibre pompé en configuration contrapropagative, l'allure de P(z) s'approche d'une exponentielle et de ce fait, la contribution des régions de la fibre situées vers la sortie de l'amplificateur où la puissance est la plus grande est plus importante que celle des régions situées en entrée de fibre. Ainsi, en mode contrapropagatif, la déposante a montré qu'il était avantageux de décaler le maximum local vers l'extrémité de sortie de la fibre pour l'élévation du seuil Brillouin. L'optimisation consiste alors à faire varier le paramètre x qui paramètre le profil (6) dans les équations (1) et (2) pour une élongation maximale constante et un profil P(z) donné et à minimiser la valeur du paramètre Brillouin maximal

$\gamma_{B,eff}^{max}(x)$. Un tel profil d'élongation peut être obtenu également avec une structure déformable du type de la figure 3B en disposant deux parties 341a et 341b sensiblement de même longueur et en enroulant la fibre optique amplificatrice autour de la structure mais avec un espacement variable entre les spires, de telle sorte que le nombre de spires du côté de l'entrée de la fibre avant le point de la fibre subissant le maximum local d'élongation soit inférieur au nombre de spires du côté de la sortie de la fibre après le point de la fibre subissant le maximum local d'élongation.

Les positions des optimums données ci-dessus peuvent bien sûr être recalculées pour des distributions de puissance P(z) différentes ou des profils d'élongation à plusieurs maxima. En particulier, il apparaît que dans le cadre d'une fibre optique pompée en configuration copropagative dans le coeur, la distribution de P(z) suit une allure plus exponentielle. Le profil optimal est donc là encore caractérisé par 0,5<x<0,9.

Afin de d'approcher mieux de la condition selon laquelle $\dfrac{d\Delta v}{dz}$ est proportionnel à P(z) au signe près, il est également possible de généraliser le profil $\Delta v$(z) à un plus grand nombre de morceaux. Ce cas est notamment intéressant si la puissance varie plus vite le long de la fibre que $\Delta v$(z) en particulier dans le cas de fibres longues (plus de 10m). Dans ce cas, la position des extrémums du profil $\Delta v$(z) sera choisie de sorte que la longueur du morceau de fibre les séparant est décroissante (ou constante) lorsqu'on se déplace vers l'extrémité de sortie de l'amplificateur.

On peut également généraliser à des profils constitués par morceaux de fonctions de pente plus forte que des fonctions affines sur chaque morceau. Il s'agit par exemple de profils qui inclurait des fonctions paraboliques ou exponentielles par morceaux. On peut par exemple implémenter de tels profils avec le dispositif représenté sur la figure 3B en enroulant la fibre optique autour des parties 341a, 341b, 342 de sorte que l'écart entre les spires soit strictement croissant. On peut aussi choisir des pièces 341 a, 341b et 342 dont le rayon n'est pas constant longitudinalement.

En plus de l'adaptation des types de profils d'élongation de la fibre optique amplificatrice résultant de l'optimisation numérique ci-dessus décrite, il est avantageux d'utiliser un dispositif qui permette une modification en cours de phase de test de l'élongation maximale et des pentes pour tenir compte du caractère non idéal de la modélisation. La présente invention permet cette optimisation.

Comme précédemment mentionné, un avantage du dispositif et de la méthode selon l'invention est notamment la possibilité de pouvoir ajuster le profil d'élongation de la fibre optique amplificatrice et de ce fait l'allure spectrale du gain Brillouin pendant les phases de mise au point de l'amplificateur fibré. Les amplificateurs à fibre optique à faible largeur spectrale sont en effet généralement des petites ou moyennes séries dans lesquelles pour chaque jeu de spécifications, il faut ajuster les longueurs de fibre, la puissance de pompe et les autres paramètres en fonction des paramètres de la fibre. En particulier, le profil d'élongation à appliquer peut dépendre de différents paramètres dont la nature de la fibre optique amplificatrice, la présence d'un cordon de sortie, la longévité recherchée pour la fibre. Dans le cas d'un profil d'élongation présentant un maximum local et, aux extrémités, des élongations nulles ou très faibles, l'ajustement pourra consister simplement à régler le maximum local d'élongation, par exemple au moyen des mécanismes d'écartement des structures précédemment décrites. La possibilité d'ajuster pendant les phases de tests l'élongation maximale permet de résoudre un inconvénient des techniques utilisant un bobinage selon un profil de tension fixé a priori. En effet ces techniques suppose divers étalonnage préalables, et notamment celui du coefficient K=$\Delta v$/$\varepsilon$ et de la largeur spectrale de la courbe du gain Brillouin de la fibre dont on voit sur la table 2 qu'ils varient significativement même pour une composition donnée de la fibre (Erbium Ytterbium ou Erbium par exemple).

En plus de la variation du coefficient K constatée pour différentes fibres, on observe d'une fibre à l'autre des allures spectrales du gain Brillouin qui diffèrent de l'allure théorique de la lorentzienne et qu'il est aussi avantageux de prendre en compte dans l'ajustement du profil d'élongation. On observe ainsi sur la figure 11A que le spectre du gain Brillouin de la fibre optique amplificatrice F ne présente pas une forme de lorentzienne pure mais comporte plusieurs pics dont la forme individuelle est lorentzienne. Notamment sur la figure 11A, on observe un pic principal 101 de fréquence Brillouin $v_{B0}$ et des pics secondaires 102 à 105 de fréquences Brillouin $v_{B1}$ à $v_{B4}$ correspondent à plusieurs modes acoustiques qui ont un recouvrement significatif avec le mode optique. Les zones de la fibre soumises à une élongation voient l'ensemble des pics de leur spectre Brillouin décalés vers les grandes fréquences. Si l'on considère deux zones de la fibre soumises à des élongations différentes, on observe des décalages en fréquences différents, par exemple $\Delta v1$ et $\Delta v_2$ respectivement. Une onde Stokes mesurée à la fréquence résultant de la somme de la fréquence Brillouin du pic principal $v_{B0}$ et du décalage $\Delta v_1$ pourra ainsi être amplifiée dans la deuxième zone si il existe un pic secondaire à la fréquence $v_{B1}$ tel que $v_{B0} + \Delta v_1 \sim v_{B1} + \Delta v_2$ à $\Delta v_B$ près. Il en résulte que l'augmentation du seuil Brillouin pour un gradient de contrainte donné sera plus faible dans une fibre dont le spectre de gain Brillouin, mesuré lorsque la fibre est sous tension nulle, comporte plusieurs pics.

Un autre élément qui peut être pris en compte pour l'ajustement du profil d'élongation lors des phases de test de l'amplificateur à fibre optique est la présence d'un cordon de sortie en fibre passive due à la présence soit d'un connecteur de sortie soit d'un composant fibré tel qu'un isolateur par exemple. Le cordon de sortie en fibre passive agencée à l'extrémité de sortie de la fibre optique amplificatrice génère une onde Stokes à une fréquence donnée $v_{Bc}$

et crée un pic supplémentaire dans le spectre du gain Brillouin. Ainsi sur la figure 11A, le pic 106 correspond à la présence d'un cordon de fibre A en extrémité de la fibre dopée F. Comme précédemment, l'onde Stokes générée par le cordon de sortie pourra également être amplifiée dans certaines zones de l'amplificateur si le décalage Brillouin $\Delta \nu_2$ de ces zones est tel que $\nu_{B2} + \Delta \nu_2 = \nu_{Bc}$. Considérons par exemple, le cas d'un morceau de fibre C dont le pic principal est situé à $\nu_{B 0} \sim 10{,}42$ GHz. Cette même fibre soumise à une élongation de la fibre à 1% d'élongation induit un pic Stokes à 10,89 GHz qui proche de la valeur pour une fibre monomode standard (fibre A par exemple). Lorsqu'on atteint 1% d'élongation, l'élévation du seuil Brillouin d'un amplificateur construit à partir de cette fibre amplificatrice et d'une longueur $L_{cordon}$ de fibre passive va donc saturer voire décroître.

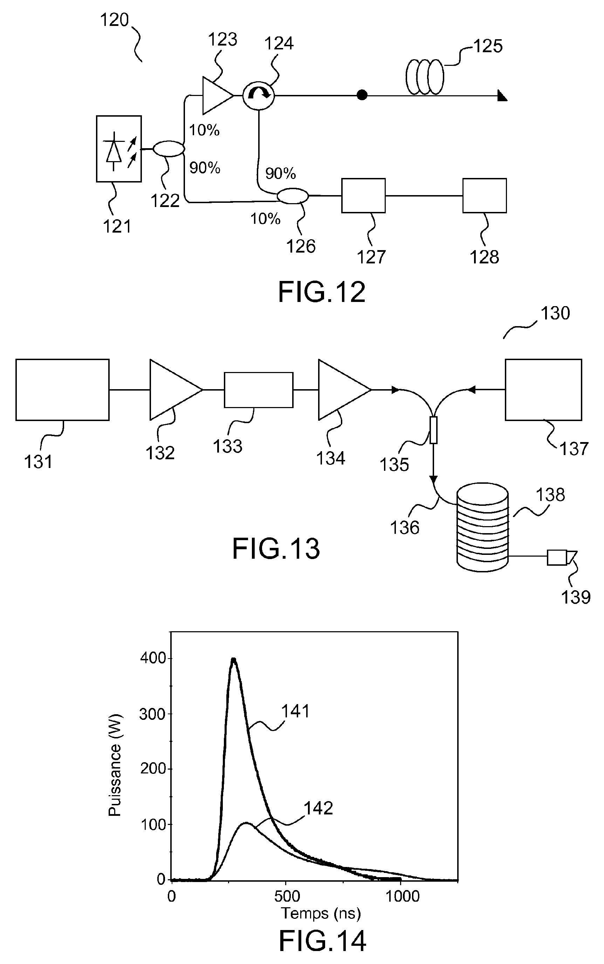

La mesure du gain Brillouin lors des phases de test de l'amplificateur est faite par exemple au moyen d'un dispositif expérimental connu tel que décrit dans l'article dans l'article de G. Canat et al. (« Characteristics of the Brillouin spectra in Erbium-Ytterbium fibers) dont un schéma est reproduit sur la figure 12. Le dispositif 120 comprend un laser oscillateur maitre 121 de largeur spectrale inférieure à la largeur de gain Brillouin (par exemple une diode laser DFB de largeur spectrale 500 kHz), un coupleur fibré 10/90 (122) qui génère une onde à amplifier et un oscillateur local, un amplificateur à fibre optique dopée 123, un circulateur fibré 124, la fibre à tester 125 dont l'extrémité est clivée à angle, un coupleur fibré 10/90 (126), un détecteur 127 dont la bande passante permet de détecter le battement entre l'oscillateur local prélevé sur l'oscillateur maître et l'onde Stokes rétrodiffusée par la diffusion Brillouin. Le battement oscille à la fréquence $\upsilon_B$ de l'ordre de 11 GHz pour une lumière incidente émise à 1,55 $\mu$m, de l'ordre de 16 GHz pour une onde incidente émise à une longueur d'onde proche de 1,06 $\mu$m et de l'ordre de 8,5 GHz pour une onde incidente émise à une longueur d'onde proche de 2 $\mu$m. Le signal radio-fréquence généré par le photodétecteur peut être enregistré avec une analyseur de spectre électrique 128 de bande passante et de sensibilité suffisante. Les composants fibrés peuvent avantageusement être à maintien de polarisation ou un contrôleur de polarisation peut être ajouté entre les deux coupleurs.

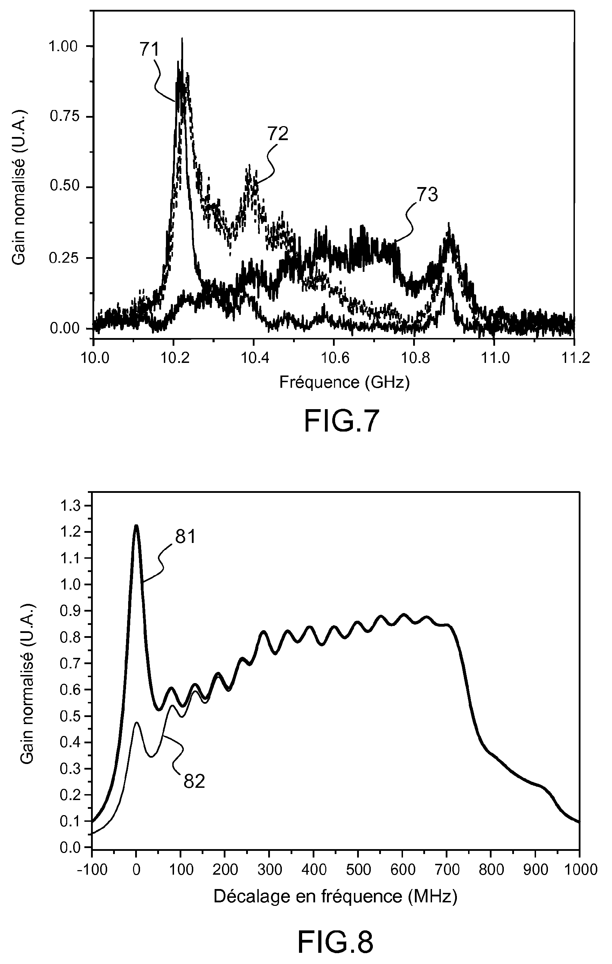

Les figures 7 à 10 illustrent l'effet des spécificités des fibres sur l'élévation du seuil Brillouin et montrent comment l'ajustement du profil d'élongation peut en permettre l'optimisation.

La figure 7 illustre le spectre du gain Brillouin mesuré d'une fibre de type F de 3 m de longueur pompée à 975 nm en copropagatif, à l'extrémité de laquelle se trouve un cordon de sortie en fibre A et soumise à un profil d'élongation du type de celui représenté sur la figure 5 pour trois valeurs d'élongation maximale différentes. La courbe 71 correspond à une élongation maximale nulle (pas de contrainte) ; il s'agit donc de la même courbe que celle représentée sur la figure 11A. La courbe 72 correspond à une première valeur d'élongation maximale et la courbe 73 à une seconde valeur d'élongation maximale supérieure à la première valeur. On observe à partir de ces courbes que pour l'élongation maximale la plus forte (courbe 73), le spectre de la fibre dopée et celui du cordon de sortie se recouvrent. Le seuil Brillouin dans ce cas ne va plus augmenter. L'ajustement du profil d'élongation permet ainsi de ne pas augmenter la valeur d'élongation maximale au-delà d'une valeur limite à partir de laquelle l'effet d'élévation du seuil Brillouin ne pourra plus être obtenu.

La figure 8 illustre l'influence de la présence d'une portion de fibre non contrainte à l'extrémité de la fibre amplificatrice. La courbe 81 montre le spectre du gain Brillouin avec une fibre optique amplificatrice de type F présentant un profil d'élongation du type de celui de la figure 5 et à l'extrémité de sortie de laquelle se trouve et un morceau de fibre du même type, non contrainte, de 25 cm. La figure 82 montre le spectre du gain Brillouin avec la même fibre optique amplificatrice mais le morceau de fibre non contrainte est de 10 cm, la soudure ayant été faite avant la mise sous tension. On observe clairement le pic résiduel sur la courbe 81 dû au morceau de fibre non contrainte. On cherchera donc à limiter la longueur de fibre non contrainte du côté de l'extrémité de sortie de la fibre amplificatrice. Pour cela, la soudure des éléments passifs fibrés avant la mise sous contrainte de la fibre grâce à la structure déformable décrite dans la présente demande est avantageuse.

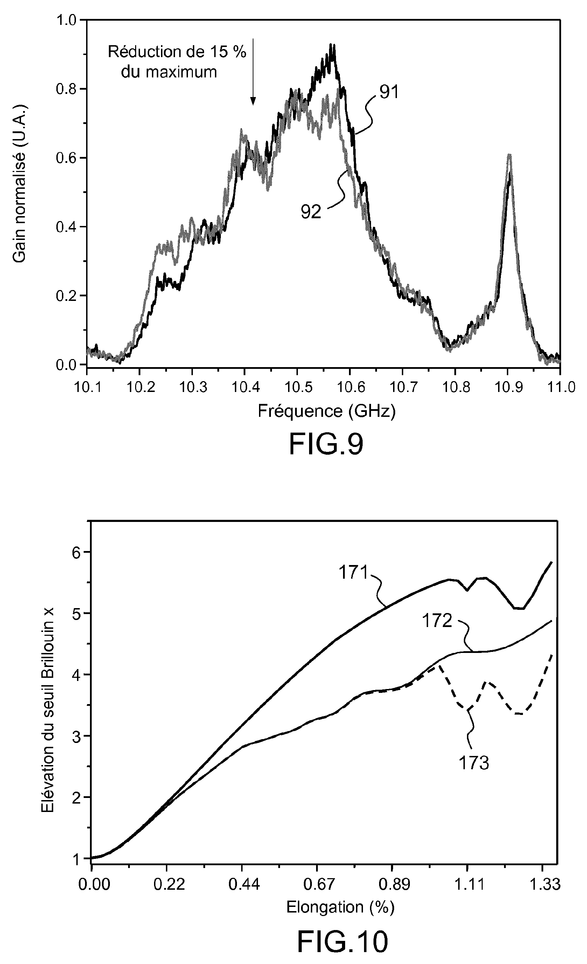

La figure 9 illustre la possibilité de modifier aisément le profil d'élongation et l'impact sur le spectre. Un amplificateur a été réalisé avec une longueur de 3 m de fibre F pompée en configuration copropagative par un coupleur multibrin. La fibre est configurée d'abord selon une première configuration. Dans cette première configuration, 60 cm de fibre sont laissés non bobinés puis le reste de la fibre optique amplificatrice est bobinée au moyen d'un dispositif du type de celui de la figure 3B. Plus précisément, 6.5 spires de 6.5 cm de diamètre sont bobinés sur le côté 341a en entrée de fibre et 5.5 spires sont bobinés du côté 341b en sortie de fibre ; la structure déformable est ensuite utilisée pour placer la fibre sous contrainte et le spectre de gain Brillouin est enregistré (courbe 91). Le dispositif est alors détendu puis l'arrangement des spires modifié selon une deuxième configuration. Dans cette deuxième configuration, à nouveau 60 cm de fibre sont laissés non bobinés en entrée de fibre, puis 5.5 spires de 6,5 cm de diamètre sont bobinés sur le côté 341a en entrée de fibre et 6.5 spires sont bobinés du côté 341b en sortie de fibre. Le dispositif est retendu de façon à conférer la même élongation maximale (courbe 92). On constate que cette opération a permis à élongation maximale constante de réduire le gain Brillouin maximal effectif de 15 %.

La figure 10 représente l'élévation du seuil Brillouin calculée avec la fibre optique amplificatrice référencée F (courbes 172 et 173) dont le spectre du gain Brillouin est représenté sur la figure 11A, et à laquelle est appliqué un profil d'élongation du type de la figure 5, en fonction de la valeur maximale d'élongation. Les courbes 172 et 173 correspondent respectivement au calcul effectué avec la fibre F sans cordon de sortie (courbe 172) désignée par la suite par configuration

EP 2 878 043 B1

A et en présence d'un cordon de sortie de 25 cm, avec un pic correspondant au cordon de sortie (106, figure 11A) situé à 10,7 GHz désignée par la suite par configuration B. Ces deux courbes sont comparées à la courbe 171 calculée avec une fibre qui aurait un spectre de gain Brillouin similaire mais sans pics secondaires et un cordon de sortie de 25 cm avec un pic correspondant au cordon de sortie présentant un pic à 10,8 GHz désignée par la suite par configuration C. La figure 10 met en évidence la saturation de l'élévation du gain Brillouin en fonction de l'élongation maximale due à la présence du cordon de sortie. Par ailleurs, la comparaison des courbes 172 et 173 montre l'influence des pics secondaires et de la position du pic correspondant au cordon de sortie dans l'élévation du gain Brillouin. La présence de pics secondaires avec une amplitude relative au pic principal de l'ordre de 10% conduit également à une saturation de l'élévation du seuil Brillouin en fonction de l'élongation maximale, même en l'absence de cordon de sortie.

L'effet de saturation de l'élévation du seuil Brillouin montré à travers les différents exemples précédents a d'importantes conséquences sur la fiabilité de l'amplificateur. En effet, la durée de vie d'une fibre à laquelle une contrainte mécanique de tension est appliquée est limitée par la croissance de défauts structuraux. On considère généralement qu'une élongation inférieure à 1% préserve une durée de vie raisonnable supérieure à une année. On peut utiliser des élongations supérieures jusque vers 5% d'élongation si on accepte d'augmenter la probabilité de rupture. Plus précisément, la durée de vie d'une fibre soumise à une élongation $\varepsilon$ est décrite par une loi connue dite loi de Weibull. Ainsi, la durée de vie d'un tronçon de longueur L devant résister avec une probabilité donnée à une contrainte $\sigma$ proportionnelle à l'élongation $\varepsilon$ est donnée par $t(L, \sigma)=CL^{-1/6} \sigma^{-n}$ où n~20 et b et C sont des constantes. L'augmentation supplémentaire de contrainte risque donc de réduire fortement la durée de vie. On aura intérêt à ajuster la tension appliquée afin d'optimiser la durée de vie et l'augmentation du seuil Brillouin. Par exemple, augmenter l'élongation maximale de la fibre F dans la configuration B pour augmenter l'élévation du seuil Brillouin d'un facteur 3,5 à un facteur 4,5 correspond à une élongation qui augmente de 0,73% à 1.1%. Cela correspond à une réduction de la durée de vie d'un facteur environ 4400 pour n=20. Dans le cas de la configuration C, le seuil Brillouin n'est même pas augmenté par la même opération à cause de l'influence du cordon. La possibilité d'ajuster au cours des tests de l'amplificateur le profil de contrainte permet de doser finement la contrainte appliquée en observant l'élévation du seuil Brillouin obtenue en temps réel. Dans ces conditions il est avantageux de disposer d'un dispositif qui permette d'ajuster la forme spectrale du gain Brillouin une fois l'amplificateur réalisé au cours des phases de test. Cela évite d'avoir à caractériser toutes les fibres utilisées et de se reposer uniquement sur les modélisations afin de dimensionner le dispositif.

Un autre avantage du dispositif et de la méthode de fabrication d'un amplificateur à fibre optique selon l'invention est la possibilité de garder la fibre démontable pendant toute la phase de mise au point de l'amplificateur. Cela permet en effet d'adapter la longueur de la fibre optique amplificatrice. La longueur optimale de la fibre optique amplificatrice utilisée dépend de nombreux paramètres dont la longueur d'onde du signal à amplifier, la longueur d'onde précise des lasers de pompe, la température de la fibre, la quantité et la longueur d'onde d'émission spontanée provenant de préamplificateurs éventuels, etc. Il est donc complexe et peu précis de prévoir par modélisation le gain de l'amplificateur puis d'en déduire la distribution optimale d'élongation à appliquer à une fibre de longueur fixée. D'autre part, les caractéristiques des fibres sont connues seulement à au mieux 10 % près. Ainsi la longueur de la fibre pour atteindre un gain donné pourra être ajustée d'environ 10% selon le niveau de dopage réel mais aussi l'optimisation de sa composition (notamment les codopants qui jouent un rôle dans les transferts inter-ions). Dans le dispositif décrit dans la présente demande, la fibre est facilement démontable ; il est en effet aisé de décontraindre la fibre pour revenir à une configuration sans tension par exemple en rapprochant les parties rigides de la structure montrée sur la figure 3B, débobiner un peu de fibre, la raccourcir, la reconfigurer sous tension puis refaire le test. Il n'est pas nécessaire de laisser une longueur de fibre libre de contrainte pour refaire les tests et anticiper une réduction possible de longueur. Cette portion non contrainte peut en effet limiter l'élévation du seuil Brillouin, comme cela a été montré avec l'exemple illustré sur la figure 8.

Un autre aspect de l'invention est le choix des fibres optiques amplificatrice et/ou de cordons particulièrement adaptés au dispositif.

Les fibres utilisées peuvent être monomodes, à large aire modale et faiblement multimodes, ou multimodes. L'utilisation de fibre monomodes permet notamment d'améliorer la qualité spatiale et de réduire la quantité d'émission spontanée amplifiée générée par l'amplificateur. Pour obtenir des puissances élevées, la fibre amplificatrice utilisée peut être caractérisée par une large aire modale et un diamètre de coeur supérieur à 20 $\mu$m de sorte qu'elle guide plusieurs modes. Il est connu qu'un conditionnement de la fibre et une adaptation de mode appropriés permettent d'obtenir néanmoins une qualité spatiale satisfaisante. Toutefois, les soudures et adaptation de modes ne sont pas parfaites. Des modes d'ordre supérieur peuvent être excités à un faible niveau de puissance. Le faisceau en sortie de fibre résulte alors de l'interférence de tous les modes excités. Selon la phase relative entre les modes, la qualité spatiale du faisceau en sortie est plus ou moins bonne. Il est donc avantageux, une fois les différentes soudures et adaptations de modes réalisées, d'utiliser une structure conforme à la présente description pour modifier la phase entre les modes en modifiant $\varepsilon_{max}$ qui affecte la phase relative entre les modes via la modification de la longueur de la fibre et l'effet élasto-optique.

Si les dispositifs d'adaptation de modes sont de très bonne qualité, le faisceau en sortie de la fibre amplificatrice est caractérisé par une excellente qualité spatiale mesurable, par exemple, par son paramètre de propagation $M^2$ et la

stabilité de sa divergence selon la température de la fibre ou la longueur d'onde du signal injecté. Lorsque la fibre amplificatrice est caractérisée par une différence d'indice effectif faible (typiquement inférieure à $10^{-3}$) entre le mode fondamental et le mode d'ordre supérieur d'indice effectif le plus proche, la qualité spatiale en sortie de fibre est sensible aux perturbations extérieures (notamment les contraintes appliquées à la fibre). Or, la forte tension exercée sur la fibre par le dispositif conforme à l'invention se traduit par une force qu'il exerce sur celle-ci. Cette force crée un champ de contraintes dans la fibre perpendiculaire à l'axe de celle-ci qui peut perturber le profil d'indice par effet élasto-optique. En effet selon cet effet, l'indice de réfraction subit une variation proportionnelle aux contraintes internes à la fibre. Selon une variante de l'invention, la structure ou la fibre est recouverte d'un matériau élastique ou élastomère dont l'épaisseur est grande devant la taille de la zone de contact définie par la théorie de contact de Hertz. Cette couche est caractérisée par un module de Young de préférence inférieur à 100 MPa et une épaisseur de préférence supérieure à 500 $\mu$m. On préférera un module de Youg inférieur à 10 Mpa et une épaisseur supérieure à 1mm et de dureté suffisante. Cela permet d'augmenter la zone de contact entre la structure et la fibre. Il en résulte une réduction de la perturbation du profil d'indice par la contrainte. La qualité spatiale du faisceau en sortie de fibre est ainsi conservée. La déposante a montré que cette variante permet également de préserver l'état de polarisation linéaire dans une fibre à maintien de polarisation qui pourrait être perturbé par les phénomènes décrit ci-dessus. Selon une autre variante, la gaine polymère de la fibre optique utilisée possède une couche d'épaisseur supérieure à 500$\mu$m et un module inférieur à 100 MPa. Selon une autre variante, la structure est rainurée et la fibre est plaquée dans la rainure dont le rayon est voisin du rayon externe de la fibre optique.

Selon une variante, une fibre amplificatrice peut être choisie dont le pic Brillouin principal est situé à une fréquence supérieure à celle du pic du cordon de sortie. La figure 11B montre par exemple le spectre 110 du gain Brillouin d'une fibre optique amplificatrice dont l'application à l'amplificateur à fibre optique selon la présente invention est avantageuse. Il s'agit d'une fibre dopée Erbium (D dans la table 2) à l'extrémité de sortie de laquelle est fixée un cordon de sortie en fibre passive A, de longueur 20 cm. On observe sur le spectre 110 un pic 111 correspondant au gain Brillouin de la fibre amplificatrice et un pic 112 correspondant au cordon de sortie. La fréquence Brillouin du cordon de sortie étant inférieure à celle de la fibre dopée, il n'y a pas de risque de recouvrement des pics lors de l'élongation de la fibre amplificatrice. Il est donc avantageux d'utiliser le dispositif conforme à l'invention avec une fibre dopée dont le pic principal est situé à une fréquence supérieure à celle du pic principal du cordon de sortie. Ces fréquences peuvent être mesurées à l'aide du dispositif décrit au moyen de la figure 12 ci-dessus.

Selon une variant, une fibre amplificatrice est choisie dont le pic principal est situé à plus de 400 MHz en dessous du pic du cordon de sortie. Ainsi lorsque la fibre amplificatrice est placée dans le dispositif, un décalage d'environ 10 largeurs spectrales $\Delta v_B$ peut être obtenu avant d'observer une coïncidence entre le pic de la fibre amplificatrice décalé par élongation et celui du cordon de sortie. De même, l'influence de la présence d'éventuels pics secondaires est moins problématique. Les fibres amplificatrices B, E et F sont dans cette situation pour un cordon de sortie en fibre A. C'est plus généralement le cas pour une fibre Erbium-Ytterbium de forte ouverture numérique (ouverture numérique > 0.16) avec une concentration en phosphore importante (typiquement > 12% poids) et une fibre du cordon de sortie peu dopée (ouverture numérique 0.13 ou moins).

On peut également calculer les fréquences des fibres utilisées pour vérifier qu'elles remplissent les meilleures conditions. La vitesse acoustique des ondes longitudinales dans la silice pure vaut $V_{Lgaine}$=5944 m/s. La vitesse dans le coeur $V_{Lcoeur}$ dépend des concentrations des différents dopants et codopants. La variation de vitesse par rapport à $V_{Lgain}$ en % peut être estimée à partir des concentrations en oxyde de Germanium Ge0$_2$, oxyde de phosphore P$_2$O$_5$, oxyde d'aluminium Al$_2$O$_3$, fluor F introduite dans la fibre.

Enfin, il est également avantageux d'utiliser une fibre dopée telle que son spectre ne présente pas de pic secondaire acoustique. Cette situation est réalisée si la fréquence normalisée acoustique du coeur est inférieure à 2,405. Cette fréquence normalisée est définie par

$$V = qa\left(\frac{V_{Lgaine}^2}{V_{Lcoeur}^2} - 1\right)^{1/2}$$

où q est le vecteur d'onde acoustique égal à 2 fois la constante de propagation du mode optique $\beta$, a est le rayon du coeur, $V_{Lgaine}$ désigne la vitesse longitudinale acoustique dans la gaine et $V_{Lcoeur}$ est la vitesse longitudinale acoustique dans le coeur. C'est également le cas si la fibre ne guide pas de mode acoustique si $V_{Lcoeur} \geq V_{Lgaine}$. Dans le cas où la vitesse acoustique varie dans le coeur on prendre pour $V_{Lcoeur}$, le maximum de vitesse acoustique dans le coeur.

Une structure déformable du type de celle représentée sur la figure 3B a été utilisé dans un système de type oscillateur maître amplifié pour augmenter le seuil d'apparition de l'effet Brillouin dans un amplificateur optique fibré amplifiant des impulsions. La figure 13 représente de façon schématique un exemple d'un tel système maître oscillateur maître amplifié. Une source laser fibrée continue 131 (par exemple une diode laser) de faible puissance (typiquement 20 mW) mais de faible largeur spectrale (<10 kHz) émettant autour de la longueur d'onde 1545 nm est amplifiée par un premier amplificateur optique fibré 132 jusqu'à une puissance de 200 mW environ. Un modulateur acousto-optique fibré (AOM) 133 est ensuite utilisé pour découper des impulsions à une fréquence de répétition variable de 10 à 100 kHz. Ces impulsions sont amplifiées par un deuxième amplificateur optique fibré 134, permettant de porter la puissance crête de 200 mW à 20 W crête environ. La fibre de sortie du deuxième amplificateur est connectée au dernier étage d'amplification via un isolateur (non représenté). L'étage final d'amplification est constitué d'un morceau de fibre optique amplificatrice, dans cet exemple une portion de fibre optique amplificatrice de type F (table 2) d'une longueur de 2 m. Elle est enroulée sur une structure déformable du type de celle représentée sur la figure 3B. Dans ce cas, la structure comprend deux demi-cylindres mobiles (341a et 341b sur la figure 3B) de rayon 3,5 cm et de longueur 10 cm et un demi-cylindre mobile (342 sur la figure 3B) de rayon 3,5 cm et de longueur 20 cm, sur lequel la fibre est enroulée avec 5 spires de chaque côté de l'ouverture centrale. Un coupleur multibrin 135 permet d'injecter simultanément dans cette fibre le signal préamplifié, et la lumière de pompe générée par 6 diodes de pompe 137 à une longueur d'onde proche de 975 nm, en configuration copropagative. A la sortie de la fibre est soudé un cordon de sortie en fibre optique passive de type A (table 2) de longueur 15 cm muni d'un connecteur FC/APC 139.

La figure 14 illustre la puissance crête obtenue avec le système représenté sur la figure 13, dans deux configurations opérationnelles différentes. Dans la première configuration, les demi-cylindres ne sont pas écartés de sorte que la fibre amplificatrice du dernier étage n'est pas sous tension. La puissance crête maximale obtenue représentée par la courbe 142 est de 120 W, pour une durée d'impulsion de 370 ns à une cadence de 27 kHz pour une puissance de pompe couplée de 4,5W. La puissance est alors limitée par l'effet Brillouin. Dans une deuxième configuration, les deux demi-cylindres sont écartés graduellement et de manière égale des deux côtés du dispositif. Pour un écartement maximal de e = 1.5 mm, la puissance crête maximale obtenue est de 400 W pour une durée de 7 kHz pour une puissance de pompe de 4,5W montrant un gain considérable de la puissance crête de sortie.

Un tel système possède de nombreuses applications, par exemple dans les systèmes lidars, notamment pour les lidars à détection cohérente.

Bien que décrite à travers un certain nombre d'exemples de réalisation détaillés, la structure et la méthode de réalisation de l'amplificateur à fibre optique selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Amplificateur à fibre optique à seuil Brillouin élevé comprenant :

    - une fibre optique amplificatrice (16) comportant un coeur et une gaine, adaptée à l'amplification d'un faisceau signal se propageant dans ledit coeur;
    - des moyens de couplage d'un faisceau signal dans une extrémité d'entrée de ladite fibre optique amplificatrice,
    - des moyens de couplage d'un faisceau laser de pompe pour le pompage de ladite fibre optique amplificatrice,
    - une structure (330, 340) comprenant une partie déformable autour de laquelle au moins une partie de ladite fibre optique amplificatrice est enroulée sous forme de spires, lesdites spires étant en contact avec une surface de ladite partie déformable, le frottement de ladite fibre optique sur ladite surface entraînant lors de la déformation de ladite partie déformable une élongation de ladite fibre optique amplificatrice selon un profil d'élongation variable d'une spire à l'autre.

2. Amplificateur à fibre optique selon la revendication 1, dans lequel ladite fibre optique amplificatrice est fixée à ladite structure en un nombre donné de points de fixation (X, X'), l'élongation de la fibre optique amplificatrice auxdits points de fixation étant inférieure à 0,3%.

3. Amplificateur à fibre optique selon la revendication 2, dans lequel la distance entre le point de fixation le plus proche d'une extrémité de sortie de la fibre optique amplificatrice et ladite extrémité de sortie est inférieure à 25 cm.

4. Amplificateur à fibre optique selon l'une quelconque des revendications précédentes, dans lequel le profil d'élongation comprend plusieurs extremums locaux, les valeurs absolues des variations d'élongation entre deux extremums formant une suite croissante entre l'entrée et la sortie de la fibre optique amplificatrice.

5. Amplificateur à fibre optique selon l'une quelconque des revendications 1 à 3, dans lequel le profil d'élongation comprend un maximum local unique.

**6.** Amplificateur à fibre optique selon la revendication 5, dans lequel les moyens de couplage du faisceau laser de pompe étant adaptés à un pompage copropagatif dans la gaine, le maximum local unique est atteint au voisinage d'une distance donnée de l'extrémité d'entrée de la fibre optique amplificatrice, ladite distance étant une fraction x de la longueur de la fibre optique amplificatrice telle que 0,4 < x < 0,6.

**7.** Amplificateur à fibre optique selon la revendication 5, dans lequel les moyens de couplage du faisceau laser de pompe étant adaptés à un pompage contrapropagatif dans la gaine ou copropagatif dans le coeur, le maximum local unique est atteint au voisinage d'une distance donnée de l'extrémité d'entrée de la fibre optique amplificatrice, ladite distance étant une fraction x de la longueur de la fibre optique amplificatrice telle que 0,5 < x < 0,9.

**8.** Amplificateur à fibre optique selon l'une quelconque des revendications précédentes, dans lequel ladite partie déformable de la structure comprend au moins deux parties rigides autour desquelles ladite partie de la fibre optique est enroulée sous forme de spires, la déformation de la structure étant obtenue par écartement desdites parties rigides.

**9.** Amplificateur à fibre optique selon la revendication 8, dans lequel ladite partie déformable de la structure comprend une première partie rigide fixe (342) et deux autres parties rigides mobiles (341a, 341b) dont une extrémité est fixée à ladite partie fixe et l'autre extrémité peut être écartée, permettant ainsi la déformation de ladite partie déformable.

**10.** Amplificateur à fibre optique selon l'une quelconque des revendications 8 ou 9, dans lequel lesdites parties rigides ont des formes de demi-cylindre.

**11.** Amplificateur à fibre optique selon l'une quelconque des revendications précédentes, comprenant un cordon de fibre passive (17) soudé à une extrémité de sortie de ladite fibre optique amplificatrice (16) et dans lequel le spectre Brillouin de l'ensemble fibre amplificatrice et cordon de sortie, lorsqu'il est soumis à une tension nulle, comprend au moins deux pics dont un pic principal correspondant au gain Brillouin de la fibre amplificatrice et un pic correspondant au gain Brillouin du cordon de sortie, le pic correspondant au gain Brillouin du cordon de sortie présentant une fréquence inférieure audit pic principal correspondant au gain Brillouin de la fibre amplificatrice.

**12.** Amplificateur à fibre optique selon l'une quelconque des revendications 1 à 10, comprenant un cordon de fibre passive (17) soudé à l'extrémité de sortie de ladite fibre optique amplificatrice (16) et dans lequel le spectre Brillouin de l'ensemble fibre amplificatrice et cordon de sortie, lorsqu'il est soumis à une tension nulle, comprend au moins deux pics dont un pic principal correspondant au gain Brillouin de la fibre amplificatrice et un pic correspondant au gain Brillouin du cordon de sortie, le pic correspondant au gain Brillouin du cordon de sortie présentant une fréquence supérieure d'au moins 400 MHz audit pic principal correspondant au gain Brillouin de la fibre amplificatrice.

**13.** Amplificateur à fibre optique selon l'une quelconque des revendications précédentes, dans lequel la fibre optique amplificatrice et/ou la structure sont recouvertes d'un matériau élastique ou polymère.

**14.** Système oscillateur maître amplifié comprenant une source d'émission laser d'un faisceau signal, une source d'émission laser d'un faisceau de pompe et un amplificateur à fibre optique selon l'une quelconque des revendications précédentes destiné à amplifier ledit faisceau signal, dans lequel ledit faisceau de pompe est couplé à la fibre optique amplificatrice de l'amplificateur.

**15.** Système oscillateur maître amplifié selon la revendication 14, dans lequel le profil d'élongation de la fibre optique amplificatrice comprend un maximum local unique, atteint au voisinage d'une distance donnée de l'extrémité d'entrée de la fibre optique amplificatrice, ladite distance étant une fraction x de la longueur de la fibre optique amplificatrice déterminée par minimisation du gain logarithmique Brillouin maximal ($\gamma^{max}_{B,eff}$).

**16.** Méthode de fabrication d'un amplificateur à fibre amplificatrice comprenant :

- l'enroulement d'au moins une partie de ladite fibre optique amplificatrice autour d'une partie déformable d'une structure sous forme de spires, lesdites spires étant en contact avec une surface de ladite partie déformable de la structure,
- la fixation de la fibre optique amplificatrice à ladite structure en au moins deux points de fixation,
- la déformation de ladite partie déformable de la structure, entraînant par frottement de ladite fibre optique amplificatrice sur ladite surface une élongation de ladite fibre optique amplificatrice selon un profil d'élongation variable d'une spire à l'autre.

**17.** Méthode de fabrication selon la revendication 16, dans laquelle ledit amplificateur comprenant des éléments optiques passifs fibrés, la méthode comprend en outre une ou plusieurs étape(s) préalable(s) de soudure à l'au moins une des extrémité(s) de la fibre optique amplificatrice desdits éléments optiques passifs fibrés.

**18.** Méthode de fabrication selon l'une quelconque des revendications 16 ou 17 comprenant en outre :

- le couplage d'un faisceau signal dans une extrémité d'entrée de ladite fibre optique amplificatrice,
- la mesure du spectre de fluorescence Stokes de l'onde rétrodiffusée résultant de la diffusion Brillouin dans ladite fibre optique amplificatrice, et
- la déformation de ladite structure déformable en fonction du spectre de fluorescence Stokes.

**19.** Méthode de fabrication selon la revendication 18 dans laquelle le profil d'élongation présentant un maximum local, la déformation de ladite partie déformable de la structure comprend l'ajustement de la valeur maximale de l'élongation ou de la position du maximum.

**Patentansprüche**

**1.** Glasfaserverstärker mit hoher Brillouin-Schwelle, der Folgendes umfasst:

- eine verstärkende Glasfaser (16), die einen Kern und einen Mantel beinhaltet und zur Verstärkung eines Signalstrahls eingerichtet ist, das sich in dem besagten Kern ausbreitet;
- Mittel zur Kopplung eines Signalstrahls in einem Eintrittsende der besagten verstärkenden Glasfaser,
- Mittel zur Kopplung eines Pumplaserstrahls zum Pumpen der besagten verstärkenden Glasfaser,
- eine Struktur (330, 340), die einen verformbaren Teil umfasst, um den mindestens ein Teil der besagten verstärkenden Glasfaser in der Form von Wendeln gewickelt ist, wobei die besagten Wendeln in Kontakt mit einer Oberfläche des besagten verformbaren Teils sind, wobei die Reibung der besagten Glasfaser auf der besagten Oberfläche während der Verformung des besagten verformbaren Teils eine Ausdehnung der besagten verstärkenden Glasfaser gemäß einem Ausdehnungsprofil, das von einer Wendel zu einer anderen variabel ist, verursacht.

**2.** Glasfaserverstärker nach Anspruch 1, wobei die besagte verstärkende Glasfaser an der besagten Struktur an einer gegebenen Anzahl von Befestigungspunkten (X, X') befestigt ist, wobei die Ausdehnung der verstärkenden Glasfaser an den besagten Befestigungspunkten kleiner als 0,3 % ist.

**3.** Glasfaserverstärker nach Anspruch 2, wobei der Abstand zwischen dem Befestigungspunkt, der einem Austrittsende der verstärkenden Glasfaser am nächsten ist, und dem besagten Austrittsende kleiner als 25 cm ist.

**4.** Glasfaserverstärker nach einem der vorhergehenden Ansprüche, wobei das Ausdehnungsprofil mehrere lokale Extrema umfasst, wobei die absoluten Werte von Ausdehnungsvariationen zwischen zwei Extrema eine zunehmende Abfolge zwischen dem Eintritt und dem Austritt der verstärkenden Glasfaser bilden.

**5.** Glasfaserverstärker nach einem der Ansprüche 1 bis 3, wobei das Ausdehnungsprofil ein einziges lokales Maximum umfasst.

**6.** Glasfaserverstärker nach Anspruch 5, wobei die Mittel zur Kopplung des Pumplaserstrahls auf ein kopropagierendes Pumpen in dem Mantel eingerichtet sind, wobei das einzige lokale Maximum in der Nähe eines gegebenen Abstands von dem Eintrittsende der verstärkenden Glasfaser erreicht wird, wobei der besagte Abstand ein Bruchteil x der Länge der verstärkenden Glasfaser ist, wie $0,4 < x < 0,6$.

**7.** Glasfaserverstärker nach Anspruch 5, wobei die Mittel zur Kopplung des Pumplaserstrahls auf ein kontrapropagierendes Pumpen in dem Mantel oder ein kopropagierendes Pumpen in dem Kern eingerichtet sind, wobei das einzige lokale Maximum in der Nähe eines gegebenen Abstands von dem Eintrittsende der verstärkenden Glasfaser erreicht wird, wobei der besagte Abstand ein Bruchteil x der Länge der verstärkenden Glasfaser ist, wie $0,5 < x < 0,9$.

**8.** Glasfaserverstärker nach einem der vorhergehenden Ansprüche, wobei der besagte verformbare Teil der Struktur mindestens zwei starre Teile umfasst, um die der besagte Teil der Glasfaser in der Form von Wendeln gewickelt ist, wobei die Verformung der Struktur durch Verschieben der besagten starren Teile erzielt wird.

**9.** Glasfaserverstärker nach Anspruch 8, wobei der besagte verformbare Teil der Struktur einen ersten feststehenden starren Teil (342) und zwei weitere bewegliche starre Teile (341a, 341b) umfasst, bei denen ein Ende an dem besagten feststehenden Teil befestigt ist und das andere Ende verschoben sein kann, wodurch die Verformung des besagten verformbaren Teils ermöglicht wird.

**10.** Glasfaserverstärker nach einem der Ansprüche 8 oder 9, wobei die besagten starren Teile Halbzylinderformen haben.

**11.** Glasfaserverstärker nach einem der vorhergehenden Ansprüche, der eine Schnur einer passiven Faser (17) umfasst, die an ein Austrittsende der besagten verstärkenden Glasfaser (16) geschweißt ist, und wobei das Brillouin-Spektrum der Einheit aus verstärkender Faser und Austrittsschnur, wenn sie einer Nullspannung ausgesetzt ist, mindestens zwei Spitzen umfasst, von denen eine Hauptspitze der Brillouin-Verstärkung der verstärkenden Faser entspricht und eine Spitze der Brillouin-Verstärkung der Austrittsschnur entspricht, wobei die Spitze, die der Brillouin-Verstärkung der Austrittsschnur entspricht, eine Frequenz aufweist, die kleiner als die der besagten Hauptspitze ist, die der Brillouin-Verstärkung der verstärkenden Faser entspricht.

**12.** Glasfaserverstärker nach einem der Ansprüche 1 bis 10, der eine Schnur einer passiven Faser (17) umfasst, die an das Austrittsende der besagten verstärkenden Glasfaser (16) geschweißt ist, und wobei das Brillouin-Spektrum der Einheit aus verstärkender Faser und Austrittsschnur, wenn sie einer Nullspannung ausgesetzt ist, mindestens zwei Spitzen umfasst, von denen eine Hauptspitze der Brillouin-Verstärkung der verstärkenden Faser entspricht und eine Spitze der Brillouin-Verstärkung der Austrittsschnur entspricht, wobei die Spitze, die der Brillouin-Verstärkung der Austrittsschnur entspricht, eine Frequenz aufweist, die um mindestens 400 MHz größer als die der besagten Hauptspitze ist, die der Brillouin-Verstärkung der verstärkenden Faser entspricht.

**13.** Glasfaserverstärker nach einem der vorhergehenden Ansprüche, wobei die verstärkende Glasfaser und/oder die Struktur mit einem elastischen oder polymeren Material abgedeckt sind.

**14.** Verstärktes Master-Oszillatorsystem, das eine Laseremissionsquelle für einen Signalstrahl, eine Laseremissionsquelle für einen Pumpstrahl und einen Glasfaserverstärker nach einem der vorhergehenden Ansprüche, der dazu vorgesehen ist, den besagten Signalstrahl zu verstärken, umfasst, wobei der besagte Pumpstrahl mit der verstärkenden Glasfaser des Verstärkers gekoppelt wird.

**15.** Verstärktes Master-Oszillatorsystem nach Anspruch 14, wobei das Ausdehnungsprofil der verstärkenden Glasfaser ein einziges lokales Maximum umfasst, das in der Nähe eines gegebenen Abstands von dem Eintrittsende der verstärkenden Glasfaser erreicht wird, wobei der besagte Abstand ein Bruchteil x der Länge der verstärkenden Glasfaser ist, der durch Minimierung der logarithmischen maximalen Brillouin-Verstärkung ($\gamma^{max}_{B,eff}$) bestimmt wird.

**16.** Verfahren zur Herstellung eines Verstärkers mit einer verstärkenden Faser, das Folgendes umfasst:

- Wicklung mindestens eines Teils der besagten verstärkenden Glasfaser um einen verformbaren Teil einer Struktur in der Form von Wendeln, wobei die besagten Wendeln in Kontakt mit einer Oberfläche des besagten verformbaren Teils der Struktur sind,
- Befestigung der verstärkenden Glasfaser an der besagten Struktur an mindestens zwei Befestigungspunkten,
- Verformung des besagten verformbaren Teils der Struktur, was durch Reibung der besagten verstärkenden Glasfaser auf der besagten Oberfläche eine Ausdehnung der besagten verstärkenden Glasfaser gemäß einem Ausdehnungsprofil, das von einer Wendel zu einer anderen variabel ist, verursacht.

**17.** Herstellungsverfahren nach Anspruch 16, wobei der besagte Verstärker passive optische Faserelemente umfasst, wobei das Verfahren außerdem einen oder mehrere vorausgehende Schritte des Schweißens der besagten passiven optischen Faserelemente an mindestens eines der Enden der verstärkenden Glasfaser umfasst.

**18.** Herstellungsverfahren nach einem der Ansprüche 16 oder 17, das außerdem Folgendes umfasst:

- Kopplung eines Signalstrahls in einem Eintrittsende der besagten verstärkenden Glasfaser,
- Messung des Stokes-Fluoreszenzspektrums der zurückgestreuten Welle, die aus der Brillouin-Diffusion in der besagten verstärkenden Glasfaser resultiert, und
- Verformung der besagten verformbaren Struktur in Abhängigkeit von dem Stokes-Fluoreszenzspektrum.

**19.** Herstellungsverfahren nach Anspruch 18, wobei das Ausdehnungsprofil ein lokales Maximum aufweist, wobei die Verformung des besagten verformbaren Teils der Struktur die Anpassung des maximalen Werts der Ausdehnung oder der Position des Maximums umfasst.

**Claims**

**1.** An optical fiber amplifier with high Brillouin threshold comprising:

- an amplifying optical fiber (16) comprising a core and a cladding, wherein said amplifying optical fiber is suitable for the amplification of a signal beam propagating in said core;
- means for coupling a signal beam in an input end of said amplifying optical fiber,
- means for coupling a laser pump beam for the pumping of said amplifying optical fiber,
- a structure (330, 340) comprising a deformable part around which at least one part of said amplifying optical fiber is wound in the form of coils, said coils being in contact with a surface of said deformable part, the rubbing of said optical fiber on said surface causing during the deformation of said deformable part an elongation of said amplifying optical fiber according to an elongation profile varying from one coil to the next.

**2.** The optical fiber amplifier as claimed in claim 1, in which said amplifying optical fiber is fixed to said structure at a given number of fixing points (X, X'), the elongation of the amplifying optical fiber at said fixing points being less than 0.3%.

**3.** The optical fiber amplifier as claimed in claim 2, in which the distance between the fixing point closest to an output end of the amplifying optical fiber and said output end is less than 25 cm.

**4.** The optical fiber amplifier as claimed in any one of the preceding claims, in which the elongation profile comprises several local extrema, the absolute values of the variations in elongation between two extrema forming an increasing series between the input and the output of the amplifying optical fiber.

**5.** The optical fiber amplifier as claimed in any one of claims 1 to 3, in which the elongation profile comprises a single local maximum.

**6.** The optical fiber amplifier as claimed in claim 5, in which the means for coupling the laser pump beam being suitable for a co-propagating pumping in the pump clad, the single local maximum is attained in the vicinity of a given distance from the input end of the amplifying optical fiber, said distance being a fraction x of the length of the amplifying optical fiber such that $0.4 < x < 0.6$.

**7.** The optical fiber amplifier as claimed in claim 5, in which the means for coupling the laser pump beam being suitable for a counter-propagating pumping in the pump clad or co-propagating pumping in the core, the single local maximum is attained in the vicinity of a given distance from the input end of the amplifying optical fiber, said distance being a fraction x of the length of the amplifying optical fiber such that $0.5 < x < 0.9$.

**8.** The optical fiber amplifier as claimed in any one of the preceding claims, in which said deformable part of the structure comprises at least two rigid parts around which said part of the optical fiber is wound in the form of coils, the deformation of the structure being obtained by separation of said rigid parts.

**9.** The optical fiber amplifier as claimed in claim 8, in which said deformable part of the structure comprises a first fixed rigid part (342) and two other movable rigid parts (341a, 341b), one end of which is fixed to said fixed part and the other end of which can be separated, thus allowing the deformation of said deformable part.

**10.** The optical fiber amplifier as claimed in any one of claims 8 or 9, in which said rigid parts have half-cylinder shapes.

**11.** The optical fiber amplifier as claimed in any one of the preceding claims, comprising a passive fiber pigtail (17) spliced to an output end of said amplifying optical fiber (16) and in which the Brillouin spectrum of the amplifying fiber/output fiber pigtail assembly, when it is subjected to a zero tension, comprises at least two peaks, including a main peak corresponding to the Brillouin gain of the amplifying fiber and a peak corresponding to the Brillouin gain of the output fiber pigtail, the peak corresponding to the Brillouin gain of the output fiber pigtail exhibiting a lower frequency than said main peak corresponding to the Brillouin gain of the amplifying fiber.

12. The optical fiber amplifier as claimed in any one of claims 1 to 10, comprising a passive fiber pigtail (17) spliced at the output end of said amplifying optical fiber (16) and in which the Brillouin spectrum of the amplifying fiber/output fiber pigtail assembly, when it is subjected to a zero tension, comprises at least two peaks, including a main peak corresponding to the Brillouin gain of the amplifying fiber and a peak corresponding to the Brillouin gain of the output fiber pigtail, the peak corresponding to the Brillouin gain of the output fiber pigtail exhibiting a frequency at least 400 MHz higher than said main peak corresponding to the Brillouin gain of the amplifying fiber.

13. The optical fiber amplifier as claimed in any one of the preceding claims, in which the amplifying optical fiber and/or the structure are covered with an elastic or polymer material.

14. An amplified master oscillator system comprising a laser source for emitting a signal beam, a laser source for emitting a pump beam and an optical fiber amplifier as claimed in any one of the preceding claims intended to amplify said signal beam, in which said pump beam is coupled to the amplifying optical fiber of the amplifier.

15. The amplified master oscillator system as claimed in claim 14, in which the elongation profile of the amplifying optical fiber comprises a single local maximum, attained in the vicinity of a given distance from the input end of the amplifying optical fiber, said distance being a fraction x of the length of the amplifying optical fiber determined by minimizing the maximum Brillouin logarithmic gain ($\gamma^{max}_{B,eff}$).

16. A method of manufacture of an amplifier with an amplifying fiber comprising:

- the winding of at least one part of said amplifying optical fiber around a deformable part of a structure in the form of coils, said coils being in contact with a surface of said deformable part of the structure,
- the fixing of the amplifying optical fiber to said structure at at least two fixing points,
- the deformation of said deformable part of the structure, causing by rubbing of said amplifying optical fiber on said surface an elongation of said amplifying optical fiber according to an elongation profile varying from one coil to the next.

17. The method of manufacture as claimed in claim 16, in which said amplifier comprising fibered passive optical elements, the method furthermore comprises one or more prior step(s) of splicing to the at least one of the end(s) of the amplifying optical fiber of said fibered passive optical elements.

18. The method of manufacture as claimed in any one of claims 16 or 17 furthermore comprising:

- the coupling of a signal beam in an input end of said amplifying optical fiber,
- the measurement of the Stokes fluorescence spectrum of the backscattered wave resulting from Brillouin scattering in said amplifying optical fiber, and
- the deformation of said deformable structure as a function of the Stokes fluorescence spectrum.

19. The method of manufacture as claimed in claim 18 in which the elongation profile exhibiting a local maximum, the deformation of said deformable part of the structure comprises the tailoring of the maximum value of the elongation or of the position of the maximum.

FIG.1A

FIG.1B

ART ANTERIEUR

FIG.2

ART ANTERIEUR

FIG.3A

FIG.3B

FIG.4

FIG.5

FIG.6A

FIG.6B

FIG.6C

FIG.7

FIG.8

FIG.9

FIG.10

FIG.11A

FIG.11B

FIG.12

FIG.13

FIG.14

## RÉFÉRENCES CITÉES DANS LA DESCRIPTION

**Documents brevets cités dans la description**

- US 7486852 B

- US 2009003786 A1

**Littérature non-brevet citée dans la description**

- **G. CANAT et al.** Characteristics of the Brillouin spectra in Erbium-Ytterbium fibers. *Opt. Express,* 2008, vol. 16, 3212-3222
- **R. ENGELBRECHT et al.** SBS shaping and suppression by arbitrary strain distributions realized by a fiber coiling machine. *IEEE/LEOS Winter Topicals Meeting Series, 2009,* 12 Janvier 2009, 248-249
- **Y. WANG ; HONG PO.** Dynamic characteristics of double-clad fiber amplifiers for high-power pulse amplification. *J. Lightwave Technol.,* 2003, vol. 21, 2262-2270

- **G. CANAT ; J. -C. MOLLIER ; J. -P. BOUZINAC ; G. M. WILLIAMS ; B. COLE ; L. GOLDBERG ; Y. JAOUËN ; G. KULCSAR.** Dynamics of high-power erbium-ytterbium fiber amplifiers. *J. Opt. Soc. Am. B,* 2005, vol. 22, 2308-2318
- **G. CANAT et al.** *Characteristics of the Brillouin spectra in Erbium-Ytterbium fibers*